# EUROPÄISCHE PATENTSCHRIFT

(11) **EP 2 379 611 B1**
(45) Veröffentlichungstag und Bekanntmachung des Hinweises auf die Patenterteilung: **29.11.2017**
(21) Anmeldenummer: 09733756.2
(22) Anmeldetag: 19.08.2009
(51) Int. Cl.: C08G 8/28, C09J 161/14, B22C 1/22

(54) **MODIFIZIERTE PHENOLHARZE**
MODIFIED PHENOLIC RESINS
RÉSINES PHÉNOLIQUES MODIFIÉES

(30) Priorität: 19.12.2008 DE 102008055042
(43) Veröffentlichungstag der Anmeldung: 26.10.2011
(73) Patentinhaber: HÜTTENES-ALBERTUS Chemische Werke Gesellschaft mit beschränkter Haftung, 40549 Düsseldorf (DE)
(72) Erfinder: STRUNK, David, 42781 Haan (DE); LADEGOURDIE, Gerard, 40237 Düsseldorf (DE); LENZEN, Frank, 40229 Düsseldorf (DE)
(74) Vertreter: Eisenführ Speiser
(86) Internationale Anmeldenummer: PCT/EP2009/060751
(87) Internationale Veröffentlichungsnummer: WO 2009/130335

(56) Entgegenhaltungen:
- EP-A1- 0 013 402
- EP-A2- 0 423 476
- EP-A2- 1 057 554
- DE-A1- 2 430 951
- US-A- 2 182 208
- US-A- 2 657 974
- US-A- 3 409 579
- US-A- 4 022 753
- US-A1- 2004 241 331
- US-B1- 6 441 106

## Beschreibung

Die vorliegende Erfindung betrifft gemäß einem ersten Aspekt modifizierte Phenolharze, welche Kieselsäureestergruppen enthalten. Die modifizierten Phenolharze können z. B. als Komponente von Gießerei-Bindemittelsystemen Verwendung finden. Die Erfindung betrifft zudem ein Verfahren zur Herstellung solcher modifizierten Phenolharze sowie Zwei-Komponenten-Bindemittelsysteme, welche diese modifizierten Phenolharze enthalten. Darüber hinaus betrifft die Erfindung Verfahren zur Herstellung von Gießereiformen und Gießereikernen, die die modifizierten Phenolharze enthalten sowie die Gießereiformen und Gießereikerne selbst.

Die vorliegende Erfindung betrifft gemäß einem zweiten Aspekt modifizierte Phenolharze, welche Kieselsäureestergruppen enthalten, in denen 1, 2 oder 3 Alkoholreste durch substituierte oder unsubstituierte Kohlenwasserstoffreste ersetzt sind. Die modifizierten Phenolharze können z. B. als Komponente von Gießerei-Bindemittelsystemen Verwendung finden. Die Erfindung betrifft zudem ein Verfahren zur Herstellung solcher modifizierten Phenolharze sowie Zwei-Komponenten-Bindemittelsysteme, welche diese modifizierten Phenolharze enthalten. Darüber hinaus betrifft die Erfindung Verfahren zur Herstellung von Gießereiformen und Gießereikernen, die diese modifizierten Phenolharze enthalten sowie die Gießereiformen und Gießereikerne selbst.

Bei den heutigen Anforderungen an Gießerei-Bindemittelsysteme, insbesondere für das Cold-Box-, Polyurethan-Nobake- und Maskenformverfahren sind neben der Herabsetzung der Geruchsbelästigung und der Schadstoffemission die Herabsetzung der Kondensatbildung (Kokillenguss im Kaminbereich), die Erhöhung der thermischen Beständigkeit und die Herabsetzung der Gasentwicklung wichtige Merkmale, die erfüllt werden sollen.

Gießerei-Bindemittelsysteme enthalten häufig Phenolharze. Phenolharze sind Kunstharze, die durch Kondensation von Phenolen mit Aldehyden und gegebenenfalls durch Modifizierung der dabei resultierenden Kondensate gewonnen werden. Typische Beispiele solcher Phenolharze sind Novolake, Resole und Benzyletherharze (high-o,o'-Resole). Letztere werden z. B. in der US 3,495,797 beschrieben und ihre Verwendung als Harzkomponente für Gießerei-Bindemittel wird z. B. in der US 3,676,392 und US 3,409,579 beschrieben. Eine ausführliche Darstellung von Benzyletherharzen findet sich in DE 10 2004 057 671 B4, Absatz [0004].

Die Änderung der Eigenschaften von Phenolharzen durch Reaktion mit Siliziumverbindungen wurde bereits in einigen Dokumenten beschrieben.

In der US 7,259,221 B2 wird die Umsetzung von Phenoplasten mit Silanen, insbesondere mit Alkyltrialkoxysilanen beschrieben. Darüber hinaus wird die Verwendung der modifizierten Silane in Gummimischungen beschrieben. In der GB 746,498 wird die Umsetzung von Organosilanen mit Methylolphenolestern beschrieben. Die EP 0 013 402 betrifft Siloxan-modifizierte Novolake, welche durch Reaktion von Novolaken mit bifunktionellen Polysiloxanen hergestellt werden. US 2005/0284087 beschreibt die Umsetzung eines Phenolharzes mit einem Epoxysilan. In EP 1 086 972 B1 wird die Umsetzung von Kondensaten von Tetraalkylorthokieselsäureestern mit Novolaken beschrieben. US 4,022,753 beschreibt Reaktionsprodukte von Polysiloxanen, die phenolische Hydroxygruppen enthalten. GB 951,065 A beschreibt die Herstellung eines Kondensationsproduktes ausgehend von Phenol-Formaldehyd-Resolen und Alkoxyarylsilanen oder Alkoxyarylpolysiloxanen. EP 423 476 A2 beschreibt die Reaktion eines Alkoxysilans mit einem Phenolharz. JP 09-216937 beschreibt eine Zusammensetzung, die Silanmodifizierte Phenolharze enthält. In der US 6,441,106 B1 wird die Herstellung modifizierter Phenolharze aus Phenolharzen und Tetraalkoxysilanen und Alkylalkoxysilanen beschrieben. In der EP 0 423 476 A2 wird die Herstellung modifizierter Phenolharze aus Phenolharzen und Monoalkyltrialkoxysilanen beschrieben. Die Verwendung solcher modifizierten Phenolharze als Bindemittel oder Bestandteil eines Bindemittels zum Binden von Gießereiformstoffen wird weder in der US 6,441,106 B1 noch in der EP 0 423 476 2 beschrieben. In der US 3,409,579 werden Bindemittel für die Gießereitechnik beschrieben. Alkoxysilane werden dort als Additive beschrieben, die die Adhäsion verbessern und in einer Menge von 0,1 bis 2 Gew-% eingesetzt werden.

EP 1 057 554 A2 offenbart ein Zweikomponenten-Bindemittelsystem, bestehend aus einer Phenolharz-Komponente und einer Polyisocyanat-Komponente, wobei die Phenolharz-Komponente ein Phenolharz mit mindestens zwei OH-Gruppen pro Molekül und die Polyisocyanat-Komponente ein Polyisocyanat mit mindestens zwei Isocyanat-Gruppen pro Molekül umfasst, und wobei zumindest die Phenolharz-Komponente ein Lösungsmittel enthält, wobei das Lösungsmittel für das Phenolharz eine Substanz umfasst, die aus der Gruppe ausgewählt ist, die Alkylsilikate, Alkylsilikat-Oligomere und deren Gemische umfasst und/oder die Polyisocyanat-Komponente ein Lösungsmittel enthält, welches eine Substanz umfasst, die aus der Gruppe ausgewählt ist, die Alkylsilikate, Alkylsilikat-Oligomere und deren Gemische umfasst.

Wie bereits vorstehend beschrieben, führt die Verwendung von herkömmlichen Phenolharzen in Gießerei-Bindemittelsystemen zu Problemen der Geruchsbelästigung, Schadstoffemission, Kondensatbildung, Gasentwicklung und der thermischen Beständigkeit. Es war die Aufgabe der vorliegenden Erfindung, einzelne oder sämtliche dieser Probleme zu lösen oder zumindest zu mildern.

Diese Aufgabe wird gemäß einem ersten Aspekt der Erfindung gelöst durch Verwendung eines modifizierten Phenolharzes wie in den Ansprüchen definiert als Bindemittel oder Bestandteil eines Bindemittels, insbesondere zum Binden von Gießereiformstoffen, wobei das modifizierte Phenolharz Phenolharzeinheiten umfasst, die substituiert und/oder verknüpft sind (und deshalb modifiziert sind) durch Ester der Orthokieselsäure, der Dikieselsäure und/oder einer oder mehrerer Polykieselsäuren und/oder wobei das modifizierte Phenolharz herstellbar ist durch Umsetzung freier Hydroxygruppen eines Phenolharzes mit einem oder mehreren Estern der Orthokieselsäure, der Dikieselsäure und/oder einer oder mehrerer Polykieselsäuren. Im Allgemeinen sind dabei die Ester der Orthokieselsäure bevorzugt. Durch Umsetzung freier Hydroxygruppen eines Phenolharzes mit einem oder mehreren Estern der Orthokieselsäure, der Dikieselsäure und/oder einer oder mehrerer Polykieselsäuren entsteht regelmäßig ein modifiziertes Phenolharz, das Phenolharzeinheiten umfasst, die substituiert und/oder verknüpft sind (und deshalb modifiziert sind) durch Ester der Orthokieselsäure, der Dikieselsäure und/oder einer oder mehrerer Polykieselsäuren. Phenolharzeinheiten, die substituiert und/oder verknüpft sind (und deshalb modifiziert sind) durch Ester der Orthokieselsäure, der Dikieselsäure und/oder einer oder mehrerer Polykieselsäuren sind im Sinne des vorliegenden Textes solche, die mindestens eine Struktureinheit der Formel A-Si enthalten, wobei A eine Phenolharzeinheit darstellt. Das Siliziumatom ist in bevorzugten (nicht jedoch in sämtlichen) Ausgestaltungen mit weiteren Phenolharzeinheiten verbunden, wobei die Phenolharzeinheiten zusätzlich in nicht dargestellter Weise miteinander verknüpft sein können. Das Siliziumatom kann weiter mit einer oder mehreren Gruppen R-O- verbunden sein, wobei jede Gruppe R unabhängig von etwaigen weiteren Gruppen R einen organischen Rest bedeutet, bevorzugt verzweigtes oder unverzweigtes C₁- bis C₃₀-Alkyl oder Aryl. Das Siliziumatom kann außerdem jeweils über eine Sauerstoffbrücke mit weiteren Siliziumatomen verbunden sein, was jedoch nicht bevorzugt ist, wenn - wie unten diskutiert - o,o'-Resole modifiziert werden sollen. In den erfindungsgemäßen modifizierten Phenolharzen sind einzelne, mehrere, die überwiegende Zahl oder alle besagten Ester der Orthokieselsäure, der Dikieselsäure und der Polykieselsäuren mit einer, zwei, drei, vier oder mehr Phenolharzeinheiten des modifizierten Phenolharzes verbunden. Erfindungsgemäß bevorzugt ist die Verwendung des modifizierten Phenolharzes als Bindemittel oder Bestandteil eines Bindemittels im Cold-Box-Verfahren, Maskenformverfahren oder Polyurethan-Nobake-Verfahren. Am meisten bevorzugt ist die Verwendung des modifizierten Phenolharzes als Bindemittel oder Bestandteil eines Bindemittels im Cold-Box-Verfahren; dies gilt für alle nachfolgend erläuterten Ausgestaltungen des modifizierten Phenolharzes.

Erfindungsgemäß ist die Verwendung eines modifizierten Phenolharzes, wobei dieses high o,o'-Resol-Einheiten umfasst, wobei die Verwendung eines modifizierten Phenolharzes besonders bevorzugt ist, das high o,o'-Resol-Einheiten umfasst, wobei einzelne, mehrere oder sämtliche der Phenolharzeinheiten high o,o'-Resol-Einheiten sind (Verwendung eines modifizierten Benzyletherharzes).

Ebenfalls bevorzugt ist die erfindungsgemäße Verwendung eines modifizierten Phenolharzes wie in den Ansprüchen definiert, insbesondere eines modifizierten Phenolharzes wie vorstehend als bevorzugt bezeichnet, wobei dieses Phenolharzeinheiten umfasst, die verknüpft sind durch Ester der Orthokieselsäu-re, wobei modifizierte Phenolharze besonders bevorzugt sind, in denen einzelne, mehrere oder die überwiegende Zahl der Orthokieselsäureestereinheiten mit genau zwei Phenolharzeinheiten verknüpft sind. Die hierbei verwendeten Phenolharze enthalten also das folgende Strukturelement:

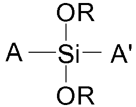

Die Reste R sind unabhängig voneinander organische Reste, wie vorstehend beschrieben; die Gruppen A und A' sind unabhängig voneinander Phenolharzeinheiten, die zusätzlich in nicht dargestellter Weise miteinander verknüpft sein können.

Die Effekte der vorliegenden Erfindung beruhen zumindest zum Teil darauf, dass Siliziumatome und Phenolharzeinheiten durch kovalente Bindungen aneinander gebunden werden, und thermisch sehr beständige Einheiten bilden. Es ist daher bevorzugt, dass möglichst viele der Bindungen der in den erfindungsgemäßen Phenolharzen vorhandenen Siliziumatome direkt mit Phenolharzeinheiten verbunden sind. Bevorzugt ist daher eine erfindungsgemäße Verwendung, wobei das modifizierte Phenolharz Phenolharzeinheiten umfasst, die substituiert und/oder verknüpft sind (und deshalb modifiziert sind) durch Ester der Orthokieselsäure, worin 50 %, bevorzugt 80 %, besonders bevorzugt 90 % und ganz besonders bevorzugt 98 % der im modifizierten Phenolharz vorhandenen Siliziumatome mit mindestens einer Phenolharzeinheit verbunden sind. Weiterhin bevorzugt ist daher eine erfindungsgemäße Verwendung, wobei das modifizierte Phenolharz Phenolharzeinheiten umfasst, die substituiert und/oder verknüpft sind (und deshalb modifiziert sind) durch Ester der Orthokieselsäure und/oder wobei das modifizierte Phenolharz herstellbar ist durch Umsetzung freier Hydroxygruppen eines Phenolharzes mit einem oder mehreren Estern der Orthokieselsäure.

In modifizierten Phenolharzen, die Phenolharzeinheiten der Dikieselsäure und/oder einer oder mehrerer Polykieselsäuren umfassen, sind die darin enthaltenen Siliziumatome potentiell mit weniger Phenolharzeinheiten verbunden. Ihre Verwendung ist im Rahmen der vorliegenden Erfindung deshalb weniger bevorzugt. Auch jede andere Art von Kondensaten, die durch partielle Hydrolyse und anschließende Kondensation von Estern der Orthokieselsäure, der Dikieselsäure und/oder einer oder mehrerer Polykieselsäuren entstehen ist für die vorliegende Erfindung weniger geeignet. Dies gilt für alle hier beschriebenen Ausführungsformen, jedoch nicht ohne Einschränkung für die erfindungsgemäße Verwendung im Cold-Box-Verfahren. Bevorzugt ist dort vielmehr im Einzelfall durchaus die erfindungsgemäße Verwendung eines modifizierten Phenolharzes, insbesondere eines modifizierten Phenolharzes wie vorstehend als bevorzugt bezeichnet, wobei dieses Phenolharzeinheiten umfasst, die verknüpft sind durch Ester der Dikieselsäure und/oder einer oder mehrerer Polykieselsäuren.

In Phenolharzen, in denen phenolische OH-Gruppen zu Alkoxygruppen verethert sind, können diese phenolischen OH-Gruppen wegen der Blockierung nicht an Siliziumatome gebunden sein. Die erfindungsgemäße Verwendung modifizierter Phenolharze, die veretherte phenolische OH-Gruppen enthalten, ist deshalb ebenfalls weniger bevorzugt. Zur Verwendung der erfindungsgemäßen Phenolharze als Bindemittel und insbesondere zur Verwendung als Bindemittel zum Binden von Gießereiformstoffen ist es in der Regel notwendig, dass die erfindungsgemäßen Phenolharze freie OH-Gruppen und insbesondere freie phenolische OH-Gruppen aufweisen. Bevorzugt ist daher die erfindungsgemäße Verwendung eines modifizierten Phenolharzes, insbesondere eines modifizierten Phenolharzes wie vorstehend als bevorzugt bezeichnet, wobei das modifizierte Phenolharz freie OH-Gruppen, bevorzugt freie phenolische OH-Gruppen enthält.

Die Verwendung eines modifizierten Phenolharzes ist besonders bevorzugt, das herstellbar ist durch ein Verfahren, in dem freie Hydroxygruppen eines Phenolharzes mit einem Tetraalkylester der Orthokieselsäure, vorzugsweise dem Tetraethylester der Orthokieselsäure so umgesetzt werden, dass das modifizierte Phenolharz resultiert.

Erfindungsgemäß ist auch die Verwendung eines modifizierten Phenolharzes, das herstellbar ist durch ein Verfahren, in dem freie Hydroxygruppen eines high o,o'-Resols mit einem Tetraalkylester der Orthokieselsäure, vorzugsweise dem Tetraethylester der Orthokieselsäure so umgesetzt werden, dass das modifizierte Phenolharz resultiert, als Bindemittel oder Bestandteil eines Bindemittels, insbesondere zum Binden von Gießereiformstoffen.

Am meisten bevorzugt ist die Verwendung eines modifizierten Phenolharzes, wobei das modifizierte Phenolharz herstellbar ist durch ein Verfahren, in dem freie Hydroxygruppen eines Phenol-Formaldehyd-high-o,o'-Resols mit einem Tetraalkylester der Orthokieselsäure, vorzugsweise dem Tetraethylester der Orthokieselsäure, so umgesetzt werden, dass das modifizierte Phenolharz resultiert.

In eigenen Untersuchungen wurde gefunden, dass die Verwendung von Phenolharzen, die Silizium in einer Form enthalten, die bei Pyrolyse zur Bildung von SiO₂-Rückständen führt, als Bindemittel oder in anderen Anwendungen zu vorteilhaften Eigenschaften führt, ohne andere gewünschten Eigenschaften, insbesondere die Festigkeit von damit hergestellten Formkörpern zu beeinträchtigen, oder im nennenswerten Maße zu beeinträchtigen. Insbesondere sind bei deren Verwendung zum Binden von Gießereiformstoffen Geruchsbelästigung, Schadstoffemission, Kondensatbildung und/oder Gasentwicklung reduziert und die thermische Beständigkeit häufig erhöht. Es ist dabei bevorzugt, wenn der überwiegende Teil der Siliziumatome durch mindestens eine kovalente Bindung mit dem Rest des Phenolharzes verbunden ist. Ähnliches gilt für andere Anwendungen.

Ebenfalls bevorzugt ist die erfindungsgemäße Verwendung (wie vorstehend beschrieben) eines modifizierten Phenolharzes, wobei das modifizierte Phenolharz bei Erhitzen unter Luft auf 1000°C im Muffelofen bis zur Massekonstanz einen Rückstand von SiO₂ von 1 Gewichtsprozent bis 30 Gewichtsprozent, bevorzugt 2 Gewichtsprozent bis 30 Gewichtsprozent, besonders bevorzugt 3 Gewichtsprozent bis 30 Gewichtsprozent, ganz besonders bevorzugt 5 Gewichtsprozent bis 25 Gewichtsprozent und am meisten bevorzugt 7 Gewichtsprozent bis 20 Gewichtsprozent bezogen auf das Gewicht der eingesetzten Masse an modifiziertem Phenolharz ergibt.

Bevorzugt ist zudem die erfindungsgemäße Verwendung (wie vorstehend beschrieben) eines modifizierten Phenolharzes, wobei das modifizierte Phenolharz herstellbar ist durch Umsetzung freier Hydroxygruppen eines Phenolharzes mit einem oder mehreren Estern der Orthokieselsäure, der Dikieselsäure und/oder einer oder mehrerer Polykieselsäuren in Gegenwart von Wasser oder Diolen, insbesondere von C₁-C₆-Diolen, wie beispielsweise ausgewählt aus der Gruppe bestehend aus Ethylenglykol, 1,2 Propandiol, 1,3 Propandiol, 1,2 Butandiol, 1,3 Butandiol und 1,4 Butandiol. Der Zusatz von Wasser und/oder Diolen erhöht in einigen Ausführungsformen überraschender Weise den Anteil an Silizium im modifizierten Phenolharz. Unter bestimmten Reaktionsbedingungen kann die Gegenwart von Wasser in der Reaktionsmischung jedoch zur Kondensation der Ester der Orthokieselsäure, der Dikieselsäure und/oder einer oder mehrerer Polykieselsäuren führen, was unerwünscht ist. Der Fachmann wird durch Vorversuche die Reaktionsbedingungen so einstellen, dass eine Kondensation unterbleibt oder nur in geringfügigem Maße auftritt.

Ein weiterer Gegenstand der Erfindung betrifft modifizierte Phenolharze wie in Ansprüchen 8 bis 11 definiert, umfassend Phenolharzeinheiten, die substituiert und/oder verknüpft (und somit modifiziert) sind durch Ester der Orthokieselsäure und/oder herstellbar sind durch Umsetzung freier Hydroxygruppen eines Phenolharzes (Grundharz) mit einem oder mehreren Estern der Orthokieselsäure. Die erfindungsgemäßen modifizierten Phenolharze sind insbesondere zur erfindungsgemäßen Verwendung geeignet.

Bevorzugt sind modifizierte Phenolharze, umfassend Phenolharzeinheiten, die herstellbar sind durch Umsetzung freier Hydroxygruppen eines Phenolharzes (Grundharz) mit einem oder mehreren Estern der Orthokieselsäure, worin das Phenolharz (Grundharz) eine durchschnittliche Anzahl von Phenoleinheiten pro Molekül von mehr als 8, bevorzugt von 9 oder mehr, besonders bevorzugt von 10 oder mehr und ganz besonders bevorzugt von 12 oder mehr besitzt. Durch Umsetzung freier Hydroxygruppen eines Phenolharzes mit einem oder mehreren Estern der Orthokieselsäure entsteht regelmäßig ein modifiziertes Phenolharz, das Phenolharzeinheiten umfasst, die substituiert und/oder verknüpft sind (und deshalb modifiziert sind) durch Ester der Orthokieselsäure. Wie vorstehend beschrieben, ist der Einsatz von Kondensaten der Orthokieselsäure weniger geeignet. Diese neuen, modifizierten Phenolharze werden bevorzugt in erfindungsgemäßer Weise verwendet. Erfindungsgemäß ist ein modifiziertes Phenolharz, in dem die Phenolharzeinheiten high o,o'-Resol-Einheiten sind. Besonders bevorzugt ist ein erfindungsgemäß modifiziertes Phenolharz, umfassend high o,o'-Resol-Einheiten, wobei einzelne, mehrere oder sämtliche der Phenolharzeinheiten high o,o'-Resol-Einheiten sind.
Bevorzugt ist ein erfindungsgemäßes modifizierten Phenolharz, insbesondere ein modifiziertes Phenolharz wie vorstehend als bevorzugt bezeichnet, wobei das modifizierte Phenolharz freie OH-Gruppen, bevorzugt freie phenolische OH-Gruppen enthält.

Bevorzugt ist auch ein erfindungsgemäß modifiziertes Phenolharz, vorzugsweise ein vorstehend als bevorzugt bezeichnet modifiziertes Phenolharz umfassend Phenolharzeinheiten, die verknüpft sind durch Ester der Orthokieselsäure, wobei einzelne oder mehrere Ester der Orthokieselsäure mit genau zwei Phenolharzeinheiten verknüpft sind.

Besonders bevorzugt ist ein erfindungsgemäß modifiziertes Phenolharz, herstellbar durch ein Verfahren, in dem freie Hydroxygruppen eines Phenolharzes mit einem Tetraethylester der Orthokieselsäure, vorzugsweise einem Tetraethylester der Orthokieselsäure, so umgesetzt werden, dass das modifizierte Phenolharz resultiert.

Dabei ist besonders bevorzugt ein erfindungsgemäß (vorzugsweise vorstehend als bevorzugt bezeichnetes) modifiziertes Phenolharz, herstellbar durch ein Verfahren, in dem freie Hydroxygruppen eines high o,o'-Resols mit einem Tetraalkylester der Orthokieselsäure, vorzugsweise dem Tetraethylester der Orthokieselsäure so umgesetzt werden, dass das modifizierte Phenolharz resultiert.

Am meisten bevorzugt ist ein erfindungsgemäßes (vorzugsweise vorstehend als bevorzugt bezeichnetes) modifiziertes Phenolharz, herstellbar durch ein Verfahren, in dem freie Hydroxygruppen eines Phenol-Formaldehyd-high-o,o'-Resols mit einem Tetraalkylester der Orthokieselsäure, vorzugsweise dem Tetraethylester der Orthokieselsäure, so umgesetzt werden, dass das modifizierte Phenolharz resultiert.

Bevorzugt ist insbesondere auch ein erfindungsgemäßes (vorzugsweise vorstehend als bevorzugt bezeichnetes) modifiziertes Phenolharz mit einem pH-Wert im Bereich von 6,0-7,0. Zur Bestimmung des pH-Wertes des Phenolharzes wird wie folgt vorgegangen: 1.) 10 Gewichtsteile Harz werden zu 90 Gewichtsteilen bidestilliertem (nahezu Ionenfreiem) Wasser gegeben und ca. 1 Stunde gerührt. 2.) Nach dem Rühren lässt man die Harzschicht ca. 30 Minuten absitzen und dekantiert die wässrige Phase ab. 3. Man misst den pH-Wert der wässrigen Phase.
Die vorstehend definierten modifizierten Phenolharze zeichnen sich durch hohe Hitzebeständigkeit aus.
Ein weiterer Gegenstand der vorliegenden Erfindung betrifft ein Zweikomponenten-Bindemittelsystem, bestehend aus einer Phenolharz-Komponente und einer Polyisocyanat-Komponente, wobei die Polyisocyanat-Komponente ein Polyisocyanat mit mindestens zwei Isocyanat-Gruppen pro Molekül umfasst und die Phenolharz-Komponente eines der vorstehend definierten erfindungsgemäß modifizierten Phenolharze umfasst. Vorzugsweise umfasst die Phenolharz-Komponente dabei eines der vorstehend beschriebenen neuen modifizierten Phenolharze.
Es wurde überraschenderweise gefunden, dass Benzyletherharze (high o,o'-Resole) (welche typische Harze für die Anwendung als Grundharz im Cold-Box-Verfahren sind) sich mit Estern der Orthokieselsäure, insbesondere Tetraethylsilikat, zu modifizierten Phenolharzen mit hervorragenden, nicht erwarteten Eigenschaften umsetzen lassen.
Erfindungsgemäße modifizierte Phenolharze, die veretherte phenolische OH-Gruppen enthalten, sind weniger bevorzugt. Bevorzugt sind somit insbesondere modifizierte Phenolharze, die keine veretherten phenolischen OH-Gruppen, insbesondere keine mit Alkylresten veretherten phenolischen OH-Gruppen enthalten.
Ein weiterer Gegenstand gemäß dem ersten Aspekt der Erfindung betrifft deshalb ein Verfahren zur Herstellung eines modifizierten Phenolharzes, mit folgendem Schritt:
- Umsetzen eines Phenolharzes (Grundharz) mit mindestens einem Ester der Orthokieselsäure, so dass ein modifiziertes Phenolharz resultiert, in dem Phenolharzeinheiten substituiert oder verknüpft sind durch Ester der Orthokieselsäure.

Bevorzugt ist ein erfindungsgemäßes Verfahren, wie in Ansprüchen 12 bis 17 definiert, worin das Phenolharz (Grundharz) eine durchschnittliche Anzahl von Phenoleinheiten pro Molekül von mehr als 8, bevorzugt von 9 oder mehr, besonders bevorzugt von 10 oder mehr und ganz besonders bevorzugt von 12 oder mehr besitzt. Besonders bevorzugt ist ein erfindungsgemäßes Verfahren zur Herstellung eines modifizierten Phenolharzes, mit folgendem Schritt:
- Umsetzen eines Phenolharzes mit mindestens einem Ester der Orthokieselsäure, so dass ein modifiziertes Phenolharz resultiert, in dem Phenolharzeinheiten substituiert oder verknüpft sind durch Ester der Orthokieselsäure,
worin das Phenolharz (Grundharz) eine durchschnittliche Anzahl von Phenoleinheiten pro Molekül von mehr als 8, bevorzugt von 9 oder mehr, besonders bevorzugt von 10 oder mehr und ganz besonders bevorzugt von 12 oder mehr besitzt.

Die Umesterungsreaktion der Kieselsäureester mit dem Phenolharz kann unter Einsatz eines üblichen Katalysators erfolgen. Geeignet sind zum Beispiel Brønstedt-Säuren, Brønstedt-Basen, Lewis-Säuren, Lewis-Basen oder Metalloxide. Beispiele für geeignete Brønstedt-Säuren sind z. B. Essigsäure, Sulfonsäuren, insbesondere Paratoluolsulfonsäure, Benzoesäure, Propionsäure und andere organische Säuren. Besonders bevorzugt sind Brønstedt-Säuren mit einem pK_{S} Wert kleiner oder gleich 1. Als Brønstedt-Basen sind z.B. Alkoholate (z.B. Natriummethylat) oder Amine geeignet. Beispiele für geeignete Lewis Säuren sind Metallionen der Metalle Zink, Aluminium, Titan, Kobalt, Germanium, Zinn, Blei, Antimon, Arsen, Cer, Bor, Cadmium und Mangan. Die vorstehend genannten Metallionen können dabei zum Beispiel in Form von Salzen von organischen Säuren, Halogeniden oder Alkoxiden vorliegen. Beispiele für geeignete Oxide sind die Oxide der vorstehend genannten Metalle. Besonders bevorzugt sind organische Säuren, Dibutylzinndilaurat, Zinn(II)-2-ethylhexanoat.

Die Durchführung der Reaktion des Phenolharzes mit dem Ester der Orthokieselsäure wird dabei bevorzugt so durchgeführt, dass die phenolischen OH-Gruppen des Phenolharzes nicht, insbesondere nicht durch aus der Umesterung des Esters der Orthokieselsäure entstehenden Alkohol, verethert werden. Nachstehend, insbesondere in den Beispielen, werden hierfür geeignete Reaktionsbedingungen angegeben. Der Fachmann wird gegebenenfalls durch Vorversuche geeignete Reaktionsbedingungen bestimmen.

Die Durchführung der Reaktion des Phenolharzes mit dem Ester der Orthokieselsäure wird dabei bevorzugt auch so durchgeführt, dass die OH-Gruppen und insbesondere die phenolischen OH-Gruppen des Phenolharzes nicht vollständig zur Reaktion gebracht werden. Bevorzugt ist daher ein erfindungsgemäßes Verfahren zur Herstellung eines modifizierten Phenolharzes, insbesondere eines modifizierten Phenolharzes wie vorstehend als bevorzugt bezeichnet, wobei das Verhältnis der freien OH-Gruppen des eingesetzten Phenolharzes zu den eingesetzten Estern der Orthokieselsäure so ist, dass das resultierende modifizierte Phenolharz freie OH-Gruppen, bevorzugt freie phenolische OH-Gruppen aufweist.

Bevorzugt ist ein Verfahren zur Herstellung eines modifizierten Phenolharzes, mit folgendem Schritt: Umsetzen eines Phenolharzes mit mindestens einem Ester der Orthokieselsäure, so dass ein modifiziertes Phenolharz resultiert, in dem Phenolharzeinheiten substituiert oder verknüpft sind durch Ester der Orthokieselsäure, worin die Umsetzung in Abwesenheit von polaren aprotischen Lösungsmitteln, insbesondere Dimethylformamid erfolgt, vorzugsweise ohne Zusatz jeglichen Lösungsmittels.
Überraschenderweise reagiert TES in Bezug auf Phenole unter sauren Bedingungen bevorzugt bifunktional, so dass sich nahezu stöchiometrisch zwei der vier Ethoxygruppen substituieren lassen. Dies lässt sich durch die Massenbilanz aus Ethanol und TES bestimmen. Durch kurze Reaktionszeiten und hohen TES-Überschuss lässt sich die Reaktion jedoch auch so steuern, dass überwiegend nur eine Ethoxygruppe des TES substituiert wird. Das mittlere Molekulargewicht des Phenolharzes ändert sich dann nur in geringem Maße. Entsprechendes gilt für andere Ester von Kieselsäuren.
Überraschender Weise lassen sich jedoch auch die erfindungsgemäß erzeugten modifizierten Phenolharze mit hoher Molmasse in Estern der Orthokieselsäure, der Dikieselsäure und den Polykieselsäuren, insbesondere in TES gut lösen. Übliche Phenolharze hingegen lassen sich nur begrenzt mit TES verdünnen. In der Praxis werden bei Phenolharzen daher Co-Solventien neben TES eingesetzt, um eine zufriedenstellende Viskosität zu erlangen. Bei sehr hohen Molmassen kann auch bei den erfindungsgemäß erzeugten modifizierten Phenolharzen die Zugabe von Co-Solventien vorteilhaft oder erforderlich sein.

Eine Lösung umfasst
- ein erfindungsgemäßes modifiziertes Phenolharz wie vor- und nachstehend beschrieben sowie
- ein Lösungsmittel ausgewählt aus der Gruppe bestehend aus den Estern der Orthokieselsäure, der Dikieselsäure und den Polykieselsäuren.

Besonders bevorzugt als Lösungsmittel bzw. als Lösungsmittelbestandteil sind dabei Tetraethylsilikat (TES) sowie teilkondensierte Kieselsäureester mit einem SiO₂-Anteil von bis zu 40 Gew.%. Die Verwendung solcher Lösungen zur Herstellung von Bindemitteln zum Binden von Gießereiformstoffen führt häufig zur weiteren Verringerung von Geruchsbelästigung, Schadstoffemission, Kondensatbildung, Gasentwicklung und der thermischen Beständigkeit beim Gießvorgang gegenüber der Verwendung der erfindungsgemäßen modifizierten Phenolharze ohne die vorstehend genannten Lösungsmittel.
Die als Katalysator verwendete Säure wird vorzugsweise neutralisiert. Bei nicht erfolgter Neutralisation und Verdünnung mit TES (siehe vor- und nachstehend) kommt es bei Benzyletherharzen häufig zur Weiterreaktion freier OH-Gruppen des Harzes mit TES. Hierdurch nimmt die Anzahl freier OH-Gruppen im Harz weiter ab, so dass im Einzelfall zu wenig OH-Gruppen für die weitere Verwendung als Bindemittel, insbesondere für eine Rektion mit Isocyanaten (siehe unten) zur Verfügung stehen würden. Darüber hinaus entsteht bei der Reaktion mit TES Ethanol, welches ebenfalls unerwünscht ist, da es in der Anwendung ebenfalls mit Isocyanaten reagiert und somit dem Molekülwachstum bzw. der Binderstabilität entgegenwirkt.
Im Falle der Benzyletherharze findet bei Anwesenheit einer nicht neutralisierten Säure zusätzlich die Polykondensation des gegenüber Säure instabilen Grundharzes statt.
Bei einer Destillation zum Entfernen des Alkohols würde zudem eine Vernetzung der Phenolharzeinheiten stattfinden können, welche zum Gelieren (dreidimensionales Vernetzen; unlöslich in allen Lösemitteln; lediglich quellbar) und schließlich zum Resitzustand (dreidimensional vernetzter Duroplast) des Harzes führt. Ohne die Neutralisation nach der Umsetzung von Benzyletherharzen mit TES ist das vollständige Abdestillieren des entstandenen Alkohols überdies nur schwer durchführbar, da die Anwesenheit von Säure, insbesondere bei steigender Destillationstemperatur, zunehmend zur Polykondensation und somit schließlich zum Gelieren des Harzes führt. Selbst ohne Destillationsvorgang ist ein nicht neutralisiertes Produkt (aus Benzyletherharz mit TES) nicht lagerstabil, d.h. das Produkt geht nach nur wenigen Tagen in den Resitzustand über.
Als Neutralisierungsmittel sind Brønsted- und Lewis-Basen, insbesondere Amine, geeignet. Die Molmasse des Produktes ist abhängig vom Zugabezeitpunkt des Neutralisationsmittels. Um eine lokale Überkonzentration und eine damit einhergehende Beeinträchtigung des Produkts zu vermeiden, werden als Neutralisationsmittel verwendete Amine vorzugsweise in Ethanol oder TES vorverdünnt. Die erfindungsgemäßen modifizierten Phenolharze umfassen daher gegebenenfalls in die Phenolharzmatrix eingebettete Reaktionsprodukte aus Katalysator und Neutralisationsmittel, insbesondere Salze der bei der Herstellung zur Katalyse verwendeten Säuren. Bevorzugt weisen die erfindungsgemäßen neutralisierten modifizierten Phenolharze einen pH-Wert im Bereich von 6,0-7,0 auf. Ohne Neutralisation hat die wässrige Phase in der Regel einen pH-Wert von <4 (pH∼3).
Die Erzeugung eines erfindungsgemäß zu verwendenden modifizierten Phenolharzes sowie von nicht erfindungsgemäßen Vergleichsharzen findet vorzugsweise in folgenden Schritten statt (die nachfolgende Bezugnahme auf TES ist als Beispiel zu verstehen; analog werden auch andere Ester von Kieselsäuren eingesetzt):
a. Herstellen des Phenolharzes, als Additions- und Kondensationsprodukt aus Phenolen (Reinform oder Gemisch aus Phenol, Kresol, und Xylenol) und Aldehyden (meist Formaldehyd). Man unterscheidet in Novolake (nicht erfindungsgemäß, sauer katalysiert, F/P ist kleiner 1), Resole (nicht erfindungsgemäß, alkalisch katalysiert, F/P ist im Bereich von 1 bis 3) und high o,o'-Resole (erfindungsgemäß, mit zweiwertigen Metallionen katalysiert im schwach sauren, meist mit Zn²⁺ katalysiert, F/P ist im Bereich von 1 bis 2; auch Benzyletherharze genannt), wobei F/P das Molverhältnis vom Aldehyd zum Phenol wiedergibt.
   i. Novolake (nicht erfindungsgemäß) werden somit sauer katalysiert und mit Formaldehydunterschuss hergestellt (F/P < 1, bevorzugt F/P < 0,9; besonders bevorzugt F/P < 0,75). Das Harz ist über Methylenbrücken aufgebaut. Vor der Umsetzung mit TES werden üblicherweise Reaktionswasser und Phenol abdestilliert. Dabei werden bevorzugt Novolake mit einem Massenmittel Mw von 200 bis 2000 eingesetzt, vorzugsweise Novolake die eine durchschnittliche Anzahl von Phenoleinheiten pro Molekül von mehr als 8, bevorzugt von 9 oder mehr, besonders bevorzugt von 10 oder mehr und ganz besonders bevorzugt von 12 oder mehr besitzen.
   ii. Resole (nicht erfindungsgemäß) werden alkalisch katalysiert und mit Formaldehydüberschuss hergestellt (F/P 1 bis 3). Das Harz ist über Methylengruppen aufgebaut und enthält viele endständige Methylolgruppen. Es ist durch Hitze und Säureeinfluss selbsthärtend. Das Wasser kann daher nicht ohne weiteres abdestilliert werden. Es muss durch aufwändige Prozesse abgetrennt werden. Die Herstellung wasserfreier Resole durch azeoptrope Destillation ist zum Beispiel in der Patentschrift GB 951,065 beschrieben.
   iii. high o,o'-Resole (erfindungsgemäß) werden mit zweiwertigen Metallionen (meist Zn²⁺) im schwach Sauren katalysiert mit Aldehydüberschuss hergestellt (F/P von 1 bis 2). Das Harz ist über Methylen- und Dibenzyletherbrücken aufgebaut, welche sich überwiegend in ortho-Position der Phenoleinheiten befinden. Das Harz ist gegenüber Hitze- und Säureeinfluss instabil. Das Reaktionswasser und ein Teil des Phenol-Monomers werden vor der Umsetzung mit TES üblicherweise abdestilliert.
b. Versetzen des Grundharzes mit einer definierten Menge Tetraethylsilikat (TES)
c. gegebenenfalls Versetzen des nach Schritt b. vorliegenden Gemisches mit einer definierten Menge eines Lösungsvermittlers (z. B. Ethanol)
d. Zugeben einer definierten Menge eines Katalysators, bevorzugt einer Brønstedt-Säure (vorzugsweise Paratoluolsulfonsäure, PTS)
e. Halten der Reaktionsmischung bei einer bestimmten Temperatur für eine definierte Zeit;
f. gegebenenfalls Neutralisieren (Neutralisation ist häufig erforderlich bei Umsetzung von high o,o'-Resolen, siehe dazu aber auch unten)
g. Abdestillieren des entstandenen Ethanols (dazu anheizen und / oder Druck reduzieren)
h. gegebenenfalls Neutralisieren (insbesondere bei nachfolgender Verdünnung mit TES)
i. ggf. Endverdünnen des so hergestellten Produktes mit TES

Je nach Harztyp und Anwendung wird vom Fachmann eine geeignete Fahrweise gewählt, um ein Harz mit den gewünschten Eigenschaften zu erhalten. Konkrete Beispiele sind unten als Beispiele 1 bis 4 angegeben. Nachfolgend wird zunächst ein allgemeiner Überblick betreffend die Herstellung von silylierten Phenolharzen auf Basis von Novolaken (nicht erfindungsgemäß) und high o,o' Resolen (erfindungsgemäß) gegeben. Die Angaben sind jeweils beispielhaft, Abweichungen im Einzelfall sind möglich:

**Tabelle 1:**

| | **Novolak (nicht erfindungsgemäß)** | **Resol (nicht erfindungsgemäß)** | **High o,o'-Resol (erfindungsgemäß)** |
|---|---|---|---|
| **a) Herstellung des Grundharzes** | | | |
| Formaldehyd : Phenol | < 1,0 | > 1,0 | > 1,0 |
| Katalysator | Säure; vorzugsweise Oxalsäure, vor Umsetzung mit TES Säure neutralisieren. Im Falle von Oxalsäure auch Zersetzung bei Temperaturen von > 160 °C möglich.. | Basen, vorzugsweise Natronlauge | zweiwertige Metallionen, insbesondere Zn²⁺ |
| Harzaufbau | Methylenbrücken | Methylenbrücken, endständige Methylolgruppen | Methylen- und Methlyenetherbrücken; Methylolgruppen endständig |
| Massenmittel Mw | 200 - 5000 (bevorzugt 200-2000, typisch: 200-1000) | 140-3000 bevorzugt: 140 - 600 | 500 - 5000 (typisch: 500 - 1000) |
| (Rückstände an monomerem Phenol im Harz gehen dabei ebenfalls in die Bestimmung der mittleren Molmasse ein.) | Steuerung über P/F-Verhältnis und Funktionalität der Monomere | Steuerung primär über Kondensationszeit und Kondensationstemperatur | Steuerung primär über Kondensationszeit |
| Eigenschaft | Thermoplastisch | hitze- und säurehärtend | hitze- und säurehärtend |
| | Restmonomer Phenol < 1,0% | | Restmonomer Phenol ∼8% |

| **Umsetzung mit TES** | | | |
|---|---|---|---|
| insbesondere Versuche mit | o-Kresol-Phenol-Novolak, | Phenol-Formaldehyd-Resol; o-kresol-Formaldehyd-Resol | Phenol-Formaldehyd-high-o,o'-Resol |
| | Mw=600 | P/F = 1 : 1 | P/F = 1 : 1,3; Mw = 800 |
| b) Verhältnis Harz : TES (Masse/Masse) in den Beispielen | 2 zu 1; | 1 zu 1 | 4 zu 1; 2 zu 1 oder 1 zu 1 |
| | 4 zu 1: gute Ergebnisse im Cold-Box-Verfahren | | evtl. Ethanol als Lösungsmittel; gute Ergebnisse im Cold-Box-Verfahren |
| c) Katalysator | PTS | PTS | PTS |
| d) Temperatur | ca. 130°C | ca. 80°C | ca. 90°C |
| | Harz ist *nicht* temperaturempfindlich. | Grundharz ist temperaturempfindlich. | Grundharz ist temperaturempfindlich. |
| d) Haltephase (erforderlich, | optional. | Erforderlich | Erforderlich |
| wenn Neutralisation 1 durchgeführt werden soll) | - langsames Molekülwachstum. | - Haltezeit in der Regel < 60 Minuten: Grundharz kondensiert durch den Säureeinfluss weiter und neigt zum Gelieren. | - Silylierungsreaktion läuft sehr schnell ab: 50% TES abgebaut in <2 Minuten. |
| | | | - Haltezeit in der Regel < 60 Minuten: Grundharz kondensiert durch den Säureeinfluss weiter und neigt zum Gelieren. |
| | | | - Gute Ergebnisse im Cold-Box-Verfahren bei Haltezeit 30 Minuten. |
| e) Neutralisation 1 | optional. | Wichtig, da das Grundharz ansonsten durch die Säure weiterreagiert und beim Destillieren geliert. | Wichtig, da das Grundharz ansonsten durch die Säure weiterreagiert und beim Destillieren geliert. |
| f) Destillation des Ethanols | Reduzieren des Drucks auf ca. 7 kPa (70mbar). Erhöhung der Temperatur möglich. | | Reduzieren des Drucks auf ca. 7 kPa (70mbar). Temperatur vorzugsweise bei 90°C halten. |
| g) Neutralisation 2 | Notwendig, falls anschließend Verdünnung mit TES | Basen, vorzugsweise Natronlauge | Bereits bei e) erfolgt. |

Erfindungsgemäß ist ein Verfahren (zur Herstellung eines modifizierten Phenolharzes zur erfindungsgemäßen Verwendung), wobei das Phenolharz (Grundharz) ein high o,o'-Resol ist. Bevorzugt ist ein Verfahren zur Herstellung eines modifizierten Phenolharzes, mit folgendem Schritt: Umsetzen eines Phenolharzes mit mindestens einem Ester der Orthokieselsäure, so dass ein modifiziertes Phenolharz resultiert, in dem Phenolharzeinheiten substituiert oder verknüpft sind durch Ester der Orthokieselsäure, worin die Umsetzung in Abwesenheit von polaren aprotischen Lösungsmitteln, insbesondere Dime-thylformamid erfolgt, vorzugsweise ohne Zusatz jeglichen Lösungsmittels.

Erfindungsgemäß besonders bevorzugt ist bei Einsatz eines high o,o'-Resols als Grundharz ein erfindungsgemäßes Verfahren mit folgenden Schritten:
i. Bereitstellen einer Reaktionsmischung umfassend oder bestehend aus einem high o,o'-Resol, mindestens einem Tetraalkylester der Orthokieselsäure und einer Brønstedt-Säure mit einem pK_{S} ≤ 5, vorzugsweise mit einem pK_{S} ≤ 3 und besonders bevorzugt mit einem pK_{S} ≤ 1, wobei das Verhältnis der Stoffmenge an Silizium zum eingesetzten Gewicht an Grundharz im Bereich von 0,5 bis 20,0 mol Si pro kg Grundharz liegt, vorzugsweise im Bereich von 1 bis 5 mol Si pro kg Grundharz,
ii. Umsetzen der Mischung bei einer Temperatur im Bereich von 20 bis 150°C, bevorzugt 20 bis 120°C, besonders bevorzugt 20 bis 100 °C und ganz besonders bevorzugt bei 60 bis 95°C und einer Reaktionszeit im Bereich von 1 Minute bis 20 Stunden, bevorzugt im Bereich von 1 Minute bis 2 Stunden und besonders bevorzugt in Bereich von 15 Minuten bis 45 Minuten,
iii. Neutralisieren der gemäß Schritt ii umgesetzten Reaktionsmischung,
vi. Abdestillieren des bei der Umsetzung gemäß Schritt ii entstandenen Alkohols und gegebenenfalls eines Lösungsmittels aus der neutralisierten Reaktionsmischung bei reduziertem Druck.

Die Wahl der Reaktionszeit in Schritt ii ist dabei abhängig von der Temperatur, dem Katalysator und dem gewünschten Umsetzungsgrad. Bei höheren Temperaturen und langen Reaktionszeiten nimmt die Polykondensation des Grundharzes in nicht mehr akzeptablen Maße zu, so dass sie zum Gelieren des Benzyletherharzes und schließlich zur Resitbil-dung führt. Durch das aus der Polykondensation entstehende Wasser nimmt parallel in unerwünschtem Maße die Polysiloxanbildung zu. Wird das Reaktionsgemisch nicht neutralisiert, findet die Resitbildung nach einigen Tagen auch bei Raumtemperatur statt. Der Fachmann wird deshalb geeignete Reaktionsbedingungen wählen, die er gegebenenfalls durch Vorversuche bestimmt.

Ebenfalls bevorzugt ist ein erfindungsgemäßes Verfahren (vorzugsweise gemäß einer der vorstehend offenbarten Alternativen), wobei das Phenolharz ausgewählt ist aus der Gruppe bestehend aus Phenol-Formaldehyd-high o,o'-Resol.

In den vorstehend beschriebenen Verfahren gemäß dem ersten Aspekt der Erfindung (zur Herstellung eines modifizierten Phenolharzes zur erfindungsgemäßen Verwendung) wird der Fachmann vorteilhaft bei abnehmender Säurestärke der eingesetzten Brønstedt-Säure die Reaktionsdauer verlängern und umgekehrt.

Besonders bevorzugt ist ein erfindungsgemäßes Verfahren zur Herstellung von modifizierten Phenolharzen wie vorstehend beschrieben, worin die Umsetzung von Benzyletherharzen mit einem Ester der Orthokiesel-säure, der Dikieselsäure und/oder einer oder mehrerer Polykieselsäuren (z. B. TES) bei einer Temperatur von 60°C oder weniger durchgeführt wird. Dadurch wird die Bildung von Ethylethern im Harz minimiert und der Anteil des Siliziums im modifizierten Phenolharz erhöht. Dies ist bei Benzyletherharzen vorteilhaft, da diese Methylolgruppen besitzen, welche verethert werden können und welche gegenüber Säure und Hitze instabil sind. Insbesondere bei tiefen Temperaturen von ca. 60°C und tiefer, findet selbst bei Anwesenheit nicht neutralisierter Säure die Polykondensationsreaktion nur in vergleichsweise geringem Maße statt, so dass die Molmassenzunahme aufgrund der geringen Polykondensation des Grundharzes nur sehr langsam stattfindet. Daher kann bei Benzyletherharzen durch Anlegen eines Vakuums ein Teil des Ethanols entfernt und die Anzahl der an Phenolharzeinheiten gebundenen Siliziumatome durch Verschieben des Reaktionsgleichgewichts gesteigert werden.

Wie vorstehend beschrieben kann der Zusatz von Wasser oder Diolen bei der Herstellung der erfindungsgemäßen modifizierten Phenolharze zu einer Erhöhung des Siliziumanteils im modifizierten Phenolharz führen, was in der Regel erwünscht ist. Wasser kann in größerer Menge in einigen Ausführungsformen jedoch auch die Umsetzung stören, da es Ester von Kieselsäuren hydrolysieren kann. Die Produkte der Hydrolyse können dann weiter zu Polysiloxanen oder anderen Verbindungen kondensieren, welche unter gewissen Umständen aus der Reaktionsmischung ausfallen können. Die Kondensate besitzen im Übrigen weniger Bindungsstellen, die mit Phenolharzeinheiten reagieren können und sind deshalb weniger bevorzugt. Es wurde in eigenen Untersuchungen allerdings beobachtet, dass zumindest bei Wassermengen < 1 mol Wasser pro mol TES keine Ausfällung, insbesondere keine Ausfällung von Polysiloxanen stattfindet. Es ist daher bevorzugt, wasserarme oder wasserfreie Phenolharze zu verwenden. Die Herstellung wasserarmer oder wasserfreier Resole ist zum Beispiel in der Patentschrift GB 951,065 beschrieben. Der Fachmann wird durch einfache Vorversuche feststellen, welches der geeignete oder maximale Wassergehalt für die Phenolharze ist.

Es wurde überraschender Weise gefunden, dass bei der Kernherstellung unter Anwendung des Cold-Box-Verfahrens mit erfindungsgemäß zu verwendenden modifizierten Phenolharzen eine Mischung Harz / Polyisocyanat mit einem erheblichen Harzüberschuss bei (im Vergleich mit handelsüblichen Zwei-Komponenten-Bindemittelsystemen auf Basis von Phenolharz und Polyisocyanat) gleichem Gesamtbinderanteil eingesetzt werden kann. In bevorzugten Ausführungsformen ist es hierbei möglich, reines MDI als Polyisocyanat-Komponente einzusetzen.

Ein weiterer Gegenstand gemäß dem ersten Aspekt der vorliegenden Erfindung betrifft deshalb ein Verfahren zur Herstellung einer gehärteten Gießereiform oder eines gehärteten Gießereikerns nach dem Cold-Box-Verfahren, mit folgenden Schritten:
i. Herstellen einer Mischung umfassend oder bestehend aus einem erfindungsgemäß zu verwendenden modifizierten Phenolharz, einem Polyisocyanat (z. B. einem Diisocyanat) und einem Formstoff,
ii. Formen der Mischung zu einer Gießereiform oder einem Gießereikern und
iii. Härten der geformten Mischung, gegebenenfalls unter Einsatz eines Katalysators.

Hierbei ist ein Verfahren besonders bevorzugt, wobei das modifizierte Phenolharz und/oder das Polyisocyanat vor dem Herstellen der Mischung (d. h. vor Schritt i)) in einem Lösungsmittel, vorzugsweise dem Tetraethylester der Orthokieselsäure gelöst werden bzw. wird. Zumindest ein Teil der danach vorliegenden Gesamtmenge an Tetraethylester der Orthokieselsäure ist vorzugsweise bereits bei Herstellung des modifizierten Phenolharzes eingesetzt worden; dieser Teil kann als sogenanntes Restmonomer im modifizierten Phenolharz vorliegen, welches gelöst werden soll.
Eine weitere bevorzugte Ausführungsform ist dabei ein Verfahren, in dem in Schritt iii ein Katalysator eingesetzt wird, wobei der Katalysator ein Amin, vorzugsweise Triethylamin, Dimethylethylamin oder Dimethylisopropylamin ist, welches vorzugsweise gasförmig eingesetzt wird.
Bei dem vorstehend genannten Verfahren zur Herstellung einer gehärteten Gießereiform oder eines gehärteten Gießereikerns ist die Fließfähigkeit der Mischung umfassend oder bestehend aus einem modifizierten Phenolharz wie vorstehend definiert (vorzugsweise einem der neuen modifizierten Phenolharze), einem Polyisocyanat und einem Formstoff sehr gut, was zu einer besseren Verdichtbarkeit der Mischung führt. Dies ist vorteilhaft beim Formen der Mischung zu der Gießereiform oder dem Gießereikern.
Bei dem vorstehend genannten Verfahren zur Herstellung einer gehärteten Gießereiform oder eines gehärteten Gießereikerns ist die Verwendung eines modifizierten Phenolharzes, wobei einzelne, mehrere oder sämtliche der miteinander verknüpften Phenolharzeinheiten high o,o'-Resol-Einheiten sind, besonders bevorzugt, da bei Verwendung solcher erfindungsgemäßen modifizierten Phenolharze als Bindemittel für Sand, die daraus hergestellten Sandmischungen sich gegenüber herkömmlichen Sandmischungen durch eine verlängerte Sandlebenszeit auszeichnen.
Ein verwandter Gegenstand gemäß dem ersten Aspekt der vorliegenden Erfindung betrifft eine gehärtete Gießereiform oder einen gehärteten Gießereikern, umfassend einen Formstoff und ein ausgehärtetes (erfindungsgemäßes) Bindemittel, wobei das Bindemittel Phenolharzeinheiten umfasst, die substituiert und/oder verknüpft sind durch Ester der Orthokieselsäure, der Dikieselsäure und/oder einer oder mehrerer Polykieselsäuren, insbesondere wie im Anspruch 18 definiert. Hinsichtlich bevorzugter Ausgestaltungen des Bindemittels und der Verfahren zu seiner Herstellung gilt das oben Gesagte entsprechend.
Erfindungsgemäß gehärtete Gießereiformen und gehärteten Gießereikerne weisen in der Regel ähnliche Festigkeitsprofile auf wie gehärtete Gießereiformen oder gehärtete Gießereikerne, die unter Verwendung herkömmlicher Bindemitteln hergestellt wurden.

Gasentwicklungs-Untersuchungen mit Hilfe von Gasdruckmessungen zeigen, dass die erfindungsgemäßen gehärteten Gießereiformen und gehärteten Gießereikerne eine andere Charakteristik der Gasentwicklung aufweisen als Gießereiformen und -kerne nach dem Stand der Technik (siehe anwendungstechnisches Beispiel 2). Im Gegensatz zu herkömmlichen Systemen, die üblicherweise nach dem Eintauchen in flüssiges Aluminium zwei Gasdruck-Maxima nach 30 bis 50 Sekunden und 60 bis 80 Sekunden zeigen, weisen die erfindungsgemäßen Gießereiformen und Gießereikerne in eigenen Untersuchungen nur ein Maximum nach einem Zeitablauf von 30 bis 55 Sekunden auf. Darüber hinaus ist die gesamte freigesetzte Gasmenge deutlich geringer als bei herkömmlichen Systemen.

Die hohen Gasdrücke und Gasdruckschwankungen bei herkömmlichen Systemen führen oft zu Gasfehlern. Gussstücke, welche mit Gasfehlern behaftet sind, wenn sie mit herkömmlichen gehärteten Gießereiformen und gehärteten Gießereikernen hergestellt werden, können somit bei Einsatz erfindungsgemäß zu verwendender Bindemittel oft ohne Gasfehler gefertigt werden.

Diese Befunde werden bestätigt durch Untersuchungen mit Hilfe der Thermogravimetrischen Analyse (TGA), in denen die erfindungsgemäßen Gießereiformen und Gießereikerne erst bei höheren Temperaturen als die herkömmlichen Systeme ein signifikantes Extremum im Masseverlust-pro-Zeiteinheit-Graph aufweisen (siehe anwendungstechnisches Beispiel 3). Auch tritt in diesem Graph kein zweites ausgeprägtes Extremum auf, wie dies bei herkömmlichen Systemen der Fall ist. Der Gesamtmasseverlust ist dabei im Falle der herkömmlichen Systeme etwa 69%, während die erfindungsgemäßen Systeme nur etwa 61% Gesamtmasseverlust aufweisen. Im Vergleich bedeutet dies, dass in erfindungsgemäßen Gießereiformen und - kernen im Vergleich zu herkömmlichen Systemen 26% mehr Rückstand verbleibt. Daraus folgt, dass die Gesamtgasemission deutlich gesenkt ist.

Eine anwendungstechnische Prüfung mit dem Biegeriegel im Maskenformverfahren zeigt darüber hinaus, dass erfindungsgemäße gehärtete Gießereiformen und Gießereikerne im Vergleich mit Gießereiformen und -kernen gemäß dem Stand der Technik ein ähnliches Biegefestigkeitsniveau aufweisen (siehe anwendungstechnisches Beispiel 4). Dabei ist der Geruch bei der Herstellung der Gießereiform und Gießereikerne im Vergleich zu Standardsystemen deutlich reduziert.

Die vorliegende Erfindung betrifft somit - wie erwähnt - insbesondere die Verwendung eines modifizierten Phenolharzes als
- Bindemittel oder Bestandteil eines Bindemittels, insbesondere zum Binden von Gießereiformstoffen,
darüber hinaus aber auch die Verwendung als
- Bindemittel für Dämmstoffe, insbesondere als Bindemittel für Glasfaserdämmstoffe,
- Formstoff oder Bestandteil eines Formstoffs, insbesondere als technisches Harz, zum Beispiel als Schleifscheibenharz und/oder als Verbundstoff
- Isolator oder Bestandteil eines Isolators, insbesondere als elektrischer Isolator oder als Bestandteil davon und bevorzugt als Basismaterial zur Herstellung von Leiterplatten (Platinen), als Isolierung von Leiterplatten oder als Isolierung von Halbleiterelementen oder anderen Bauelementen die in der Halbleiterindustrie Verwendung finden, oder als
- Lack oder Bestandteil eines Lacks,
wobei das modifizierte Phenolharz Phenolharzeinheiten umfasst, die substituiert und/oder verknüpft sind durch Ester der Orthokieselsäure, der Dikieselsäure und/oder einer oder mehrerer Polykieselsäuren. Es gilt jeweils das oben Gesagte entsprechend.

Gemäß einem zweiten Aspekt der vorliegenden Erfindung werden die vorstehend genannten Aufgaben erfindungsgemäß gelöst durch Verwendung eines modifizierten Phenolharzes wie in den Ansprüchen definiert als Bindemittel oder Bestandteil eines Bindemittels, insbesondere zum Binden von Gießereiformstoffen, wobei das modifizierte Phenolharz Phenolharzeinheiten umfasst, die substituiert und/oder verknüpft sind (und deshalb modifiziert sind) durch Ester der Orthokieselsäure, in denen 1, 2 oder 3 Alkoholreste durch substituierte oder unsubstituierte Kohlenwasserstoffreste ersetzt sind und/oder wobei das modifizierte Phenolharz herstellbar ist durch Umsetzung freier Hydroxygruppen eines Phenolharzes mit einem oder mehreren Estern der Orthokieselsäure, in denen 1, 2 oder 3 Alkoholreste durch substituierte oder unsubstituierte Kohlenwasserstoffreste ersetzt sind.

Im Sinne der vorliegenden Erfindung sind Ester der Orthokieselsäure, in denen 1, 2 oder 3 Alkoholreste durch substituierte oder unsubstituierte Kohlenwasserstoffreste ersetzt sind (nachfolgend auch "modifizierte Ester" genannt), Verbindungen der Formel R¹ₙSi(OR)₄₋ₙ, worin n = 1, 2 oder 3 ist, wobei jede Gruppe R unabhängig von etwaigen weiteren Gruppen R einen organischen Rest bedeutet, bevorzugt verzweigtes oder unverzweigtes C₁- bis C₃₀-Alkyl oder Aryl, wie entsprechend in Zusammenhang mit dem ersten Aspekt definiert. R¹ ist hierbei ein substituierter oder unsubstituierter, verzweigter oder unverzweigter Kohlenwasserstoffrest und die Reste R¹ sind im Falle von n = 2 oder 3 gleich oder verschieden. Bevorzugt sind die Reste R¹ substituiertes oder unsubstituiertes, verzweigtes oder unverzweigtes C₁- bis C₃₀-Alkyl oder substituiertes oder unsubstituiertes Aryl und besonders bevorzugt substituiertes oder unsubstituiertes, verzweigtes oder unverzweigtes C₁- bis C₆-Alkyl oder substituiertes oder unsubstituiertes C₆ bis C₁₀-Aryl. Am meisten bevorzugt ist unsubstituiertes, verzweigtes oder unverzweigtes C₁- bis C₆-Alkyl oder unsubstituiertes Phenyl. Methyl und Ethyl sind hierin wiederum besonders bevorzugt. Die Kohlenwasserstoffreste können zum Beispiel substituiert sein durch Gruppen ausgewählt aus der Gruppe bestehend aus Hydroxygruppen, Alkoxygruppen, Aminogruppen, die zusätzlich gegebenenfalls durch eine oder zwei Alkyl oder Arylgruppen substituiert sind, Trialkylammoniumgruppen, Mercaptogruppen, Vinylgruppen, 3-Glycidoxigruppen und Epoxygruppen, wobei die Alkylgruppen bevorzugt C₁- bis C₆-Alkylgruppen sind.

Besonders bevorzugt sind modifizierte Ester ausgewählt aus der Gruppe bestehend aus Monoalkyltrialkoxysilanen, Dialkyldialkoxysilanen, Trialkylmonoalkoxysilanen, Monoaryltrialkoxysilanen, Diaryldialkoxysilanen und Triarylmonoalkoxysilanen, wobei die Alkylgruppen bevorzugt C₁- bis C₆-Alkylgruppen sind. Bevorzugt sind modifizierte Ester ausgewählt aus der Gruppe bestehend aus Methyltrimethoxysilan, Methyltriethoxysilan, Methyltripropoxysilan, Methyltributoxysilan, Ethyltrimethoxysilan, Methyltriethoxysilan, Ethyltriethoxysilan, n-Propyltrimethoxysilan, n-Propyltriethoxysilan, Isopropyltrimethoxysilan, Isopropyltriethoxysilan, Vinyltrimethoxysilan, Vinyltriethoxysilan, 3-Glycidoxipropyltrimethoxysilan, 3-Glycidoxypropyltriethoxysilan, 3-Mercaptopropyltrimethoxysilan, 3,4-Epoxycyclohexyltrimethoxysilan, Gamma-Aminopropyltriethoxysilan, Dimethoxydimethylsilan, Diethoxydimethylsilan, Diethyldimethoxysilan und Diethyldiethoxysilan.

Durch Umsetzung freier Hydroxygruppen eines Phenolharzes mit einem oder mehreren Estern der Orthokieselsäure, in denen 1, 2 oder 3 Alkoholreste durch substituierte oder unsubstituierte Kohlenwasserstoffreste ersetzt sind, entsteht regelmäßig ein modifiziertes Phenolharz, das Phenolharzeinheiten umfasst, die substituiert und/oder verknüpft sind (und deshalb modifiziert sind) durch Ester der Orthokieselsäure, in denen 1, 2 oder 3 Alkoholreste durch substituierte oder unsubstituierte Kohlenwasserstoffreste ersetzt sind. Phenolharzeinheiten, die substituiert und/oder verknüpft sind (und deshalb modifiziert sind) durch Ester der Orthokieselsäure, in denen 1, 2 oder 3 Alkoholreste durch substituierte oder unsubstituierte Kohlenwasserstoffreste ersetzt sind sind im Sinne des vorliegenden Textes solche, die mindestens eine Struktureinheit der Formel A-Si enthalten, wobei A eine Phenolharzeinheit darstellt. Das Siliziumatom ist in bevorzugten (nicht jedoch in sämtlichen) Ausgestaltungen mit weiteren Phenolharzeinheiten verbunden, wobei die Phenolharzeinheiten zusätzlich in nicht dargestellter Weise miteinander verknüpft sein können. Das Siliziumatom ist aber gemäß dem zweiten Aspekt der vorliegenden Erfindung in jedem Falle mit 1, 2 oder 3 substituierten oder unsubstituierten Kohlenwasserstoffresten R¹ verbunden, wobei jedes R¹ unabhängig von etwaigen weiteren Gruppen R¹ wie vorstehend beschrieben definiert ist. Das Siliziumatom kann weiter mit einer oder mehreren Gruppen R-O- verbunden sein, wobei jede Gruppe R unabhängig von etwaigen weiteren Gruppen R wie vorstehend definiert ist. Das Siliziumatom kann außerdem jeweils über eine Sauerstoffbrücke mit weiteren Siliziumatomen verbunden sein. In den erfindungsgemäßen modifizierten Phenolharzen sind einzelne, mehrere, die überwiegende Zahl oder alle besagten Ester der Orthokieselsäure, in denen 1, 2 oder 3 Alkoholreste durch substituierte oder unsubstituierte Kohlenwasserstoffreste ersetzt sind mit einer, zwei oder drei Phenolharzeinheiten des modifizierten Phenolharzes verbunden.

Erfindungsgemäß bevorzugt ist die Verwendung des modifizierten Phenolharzes als Bindemittel oder Bestandteil eines Bindemittels im Cold-Box-Verfahren, Maskenformverfahren oder Polyurethan-Nobake-Verfahren. Am meisten bevorzugt ist die Verwendung des modifizierten Phenolharzes als Bindemittel oder Bestandteil eines Bindemittels im Cold-Box-Verfahren; dies gilt für alle nachfolgend erläuterten Ausgestaltungen des modifizierten Phenolharzes.

Erfindungsgemäß ist die Verwendung eines modifizierten Phenolharzes, wobei dieses high o,o'-Resol-Einheiten umfasst, wobei die Verwendung eines modifizierten Phenolharzes besonders bevorzugt ist, das high o,o'-Resol-Einheiten umfasst, wobei einzelne, mehrere oder sämtliche der Phenolharzeinheiten high o,o'-Resol-Einheiten sind (Verwendung eines modifizierten Benzyletherharzes).

Ebenfalls bevorzugt ist die erfindungsgemäße Verwendung eines modifizierten Phenolharzes gemäß dem zweiten Aspekt der vorliegenden Erfindung wie in den Ansprüchen definiert, insbesondere eines modifizierten Phenolharzes wie vorstehend als bevorzugt bezeichnet, wobei dieses Phenolharzeinheiten umfasst, die verknüpft sind durch Ester der Orthokieselsäure, in denen 1, 2 oder 3 Alkoholreste durch substituierte oder unsubstituierte Kohlenwasserstoffreste ersetzt sind, wobei modifizierte Phenolharze besonders bevorzugt sind, in denen einzelne, mehrere oder die überwiegende Zahl der Orthokieselsäureestereinheiten, in denen 1 oder 2 Alkoholreste durch substituierte oder unsubstituierte Kohlenwasserstoffreste ersetzt sind, mit genau zwei Phenolharzeinheiten verknüpft sind. Die hierbei verwendeten Phenolharze enthalten also das folgende Strukturelement:

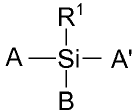

B ist OR oder R¹. R und R¹ sind wie vorstehend beschrieben. Die Gruppen A und A' sind unabhängig voneinander Phenolharzeinheiten, die zusätzlich in nicht dargestellter Weise miteinander verknüpft sein können.

Die Effekte der vorliegenden Erfindung beruhen wahrscheinlich zumindest zum Teil darauf, dass Siliziumatome und Phenolharzeinheiten durch kovalente Bindungen aneinander gebunden werden, und thermisch sehr beständige Einheiten bilden. Es ist daher bevorzugt, dass möglichst viele der Bindungen der in den erfindungsgemäßen Phenolharzen vorhandenen Siliziumatome direkt mit Phenolharzeinheiten verbunden sind. Bevorzugt ist daher eine erfindungsgemäße Verwendung, wobei das modifizierte Phenolharz Phenolharzeinheiten umfasst, die substituiert und/oder verknüpft sind durch Ester der Orthokieselsäure, in denen 1, 2 oder 3 Alkoholreste durch substituierte oder unsubstituierte Kohlenwasserstoffreste ersetzt sind, worin 50 %, bevorzugt 80 %, besonders bevorzugt 90 % und ganz besonders bevorzugt 98 % der im modifizierten Phenolharz vorhandenen Siliziumatome mit mindestens einer Phenolharzeinheit verbunden sind. Kondensate, die durch partielle Hydrolyse und anschließende Kondensation von Estern der Orthokieselsäure, in denen 1, 2 oder 3 Alkoholreste durch substituierte oder unsubstituierte Kohlenwasserstoffreste ersetzt sind, entstehen, sind für die Verwendung gemäß der vorliegenden Erfindung weniger geeignet, da hier zumindest einige der Valenzen der Siliziumatome nicht mit Phenolharzeinheiten verknüpft sein können. Dies gilt für alle hier beschriebenen Ausführungsformen.

In Phenolharzeinheiten, in denen phenolische OH-Gruppen zu Alkoxygruppen verethert sind, können diese phenolischen OH-Gruppen wegen der Blockierung nicht an Siliziumatome gebunden sein. Die erfindungsgemäße Verwendung modifizierter Phenolharze die veretherte phenolische OH-Gruppen enthalten, ist deshalb ebenfalls weniger bevorzugt.

Die Verwendung eines modifizierten Phenolharzes ist besonders bevorzugt, das herstellbar ist durch ein Verfahren, in dem freie Hydroxygruppen eines Phenolharzes mit einem Dialkyldialkoxysilan, vorzugsweise mit Diethoxydimethylsilan so umgesetzt werden, dass das modifizierte Phenolharz resultiert.

Erfindungsgemäß ist auch die Verwendung eines modifizierten Phenolharzes, das herstellbar ist durch ein Verfahren, in dem freie Hydroxygruppen eines high o,o'-Resols, mit einem Dialkyldialkoxysilan, vorzugsweise mit Diethoxydimethylsilan so umgesetzt werden, dass das modifizierte Phenolharz resultiert, als Bindemittel oder Bestandteil eines Bindemittels, insbesondere zum Binden von Gießereiformstoffen.

Am meisten bevorzugt ist die Verwendung eines modifizierten Phenolharzes, wobei das modifizierte Phenolharz herstellbar ist durch ein Verfahren, in dem freie Hydroxygruppen eines Phenol-Formaldehyd-high-o,o'-Resols mit einem Dialkyldialkoxysilan, vorzugsweise mit Diethoxydimethylsilan, so umgesetzt werden, dass das modifizierte Phenolharz resultiert.

Bevorzugt ist insbesondere auch ein erfindungsgemäßes (vorzugsweise vorstehend als bevorzugt bezeichnetes) modifiziertes Phenolharz mit einem pH-Wert im Bereich von 6,0-7,0.

In eigenen Untersuchungen wurde gefunden, dass die Verwendung von Phenolharzen, die Silizium in einer Form enthalten, die bei Pyrolyse zur Bildung von SiO₂-Rückständen führt, als Bindemittel oder in anderen Anwendungen zu vorteilhaften Eigenschaften führt, ohne andere gewünschten Eigenschaften, insbesondere die Festigkeit von damit hergestellten Formkörpern zu beeinträchtigen, oder im nennenswerten Maße zu beeinträchtigen. Insbesondere sind bei deren Verwendung zum Binden von Gießereiformstoffen Geruchsbelästigung, Schadstoffemission, Kondensatbildung und/oder Gasentwicklung reduziert und die thermische Beständigkeit häufig erhöht. Es ist dabei bevorzugt, wenn der überwiegende Teil der Siliziumatome durch mindestens eine kovalente Bindung mit dem Rest des Phenolharzes verbunden ist. Ähnliches gilt für andere Anwendungen.

Ebenfalls bevorzugt ist die erfindungsgemäße Verwendung (wie vorstehend beschrieben) eines modifizierten Phenolharzes, wobei das modifizierte Phenolharz bei Erhitzen unter Luft auf 1000°C im Muffelofen bis zur Massekonstanz einen Rückstand von SiO₂ von 1 Gewichtsprozent bis 30 Gewichtsprozent, bevorzugt 2 Gewichtsprozent bis 30 Gewichtsprozent, besonders bevorzugt 3 Gewichtsprozent bis 30 Gewichtsprozent, ganz besonders bevorzugt 5 Gewichtsprozent bis 25 Gewichtsprozent und am meisten bevorzugt 7 Gewichtsprozent bis 20 Gewichtsprozent bezogen auf das Gewicht der eingesetzten Masse an modifiziertem Phenolharz ergibt.

Ist der Rückstand von SiO₂ (und damit der Anteil an gebundenem Silizium im modifizierten Phenolharz) zu gering, so sind die vorteilhaften Effekte der vorliegenden Erfindung nicht genügend ausgeprägt. Dies gilt insbesondere für die Reduktion der Abgase in Gießereiprozessen. Ist der Rückstand von SiO₂ zu hoch, so ist die Wirkung der modifizierten Phenolharze als Bindemittel nicht immer ausreichend.

Ein weiterer Gegenstand der vorliegenden Erfindung betrifft modifizierte Phenolharze, umfassend Phenolharzeinheiten, die substituiert und/oder verknüpft (und somit modifiziert) sind durch Ester der Orthokieselsäure, in denen 1, 2 oder 3 Alkoholreste durch substituierte oder unsubstituierte Kohlenwasserstoffreste ersetzt sind und/oder herstellbar sind durch Umsetzung freier Hydroxygruppen eines Phenolharzes mit einem oder mehreren Estern der Orthokieselsäure, in denen 1, 2 oder 3 Alkoholreste durch substituierte oder unsubstituierte Kohlenwasserstoffreste ersetzt sind. Bevorzugt sind neue modifizierte Phenolharze, umfassend Phenolharzeinheiten, die herstellbar sind durch Umsetzung freier Hydroxygruppen eines Phenolharzes (Grundharz) mit einem oder mehreren Estern der Orthokieselsäure, in denen 1, 2 oder 3 Alkoholreste durch substituierte oder unsubstituierte Kohlenwasserstoffreste ersetzt sind, worin das Phenolharz (Grundharz) eine durchschnittliche Anzahl von Phenoleinheiten pro Molekül von mehr als 8, bevorzugt von 9 oder mehr, besonders bevorzugt von 10 oder mehr und ganz besonders bevorzugt von 12 oder mehr besitzt. Durch Umsetzung freier Hydroxygruppen eines Phenolharzes mit einem oder mehreren Estern der Orthokieselsäure, in denen 1, 2 oder 3 Alkoholreste durch substituierte oder unsubstituierte Kohlenwasserstoffreste ersetzt sind, entsteht regelmäßig ein modifiziertes Phenolharz, das Phenolharzeinheiten umfasst, die substituiert und/oder verknüpft sind (und deshalb modifiziert sind) durch Ester der Orthokieselsäure, in denen 1, 2 oder 3 Alkoholreste durch substituierte oder unsubstituierte Kohlenwasserstoffreste ersetzt sind. Diese modifizierten Phenolharze werden bevorzugt in erfindungsgemäßer Weise verwendet. Erfindungsgemäß ist ein modifiziertes Phenolharz, in dem die Phenolharzeinheiten high o,o'-Resol-Einheiten sind. Besonders bevorzugt ist ein erfindungsgemäß modifiziertes Phenolharz, umfassend high o,o'-Resol-Einheiten, wobei einzelne, mehrere oder sämtliche der Phenolharzeinheiten high o,o'-Resol-Einheiten sind. Am meisten bevorzugt ist ein modifiziertes Phenolharz,
umfassend high o,o'-Resol-Einheiten, die substituiert und/oder verknüpft sind durch Ester der Orthokieselsäure, in denen 1, 2 oder 3 Alkoholreste durch substituierte oder unsubstituierte Kohlenwasserstoffreste ersetzt sind,
und/oder
herstellbar durch Umsetzung freier Hydroxygruppen eines Phenolharzes mit einem oder mehreren Estern der Orthokieselsäure, in denen 1, 2 oder 3 Alkoholreste durch substituierte oder unsubstituierte Kohlenwasserstoffreste ersetzt sind,
und wobei das modifizierte Phenolharz bei Erhitzen unter Luft auf 1000°C im Muffelofen bis zur Massekonstanz einen Rückstand von SiO₂ im Bereich von 2 Gewichtsprozent bis 30 Gewichtsprozent bezogen auf das Gewicht der eingesetzten Masse an modifiziertem Phenolharz ergibt.

Bevorzugt ist ein modifiziertes Phenolharz, welches Phenolharzeinheiten umfasst, die substituiert und/oder verknüpft sind durch Ester der Orthokieselsäure, in denen 1, 2 oder 3 Alkoholreste durch substituierte oder unsubstituierte Kohlenwasserstoffreste ersetzt sind, worin 50 %, bevorzugt 80 %, besonders bevorzugt 90 % und ganz besonders bevorzugt 98 % der im modifizierten Phenolharz vorhandenen Siliziumatome mit mindestens einer Phenolharzeinheit verbunden sind. Modifizierte Phenolharze die Kondensate enthalten oder daraus hergestellt werden, die durch partielle Hydrolyse und anschließende Kondensation von Estern der Orthokieselsäure, in denen 1, 2 oder 3 Alkoholreste durch substituierte oder unsubstituierte Kohlenwasserstoffreste ersetzt sind, entstehen, sind für die vorliegende Erfindung weniger geeignet, da hier zumindest einige der Valenzen der Siliziumatome nicht mit Phenolharzeinheiten verknüpft sein können. Dies gilt für alle hier beschriebenen Ausführungsformen.

Bevorzugt ist auch ein erfindungsgemäß modifiziertes Phenolharz, vorzugsweise ein vorstehend als bevorzugt bezeichnet modifiziertes Phenolharz umfassend Phenolharzeinheiten, die verknüpft sind durch Ester der Orthokieselsäure, in denen 1 oder 2 Alkoholreste durch substituierte oder unsubstituierte Kohlenwasserstoffreste ersetzt sind, wobei einzelne oder mehrere Ester der Orthokieselsäure, in denen 1 oder 2 Alkoholreste durch substituierte oder unsubstituierte Kohlenwasserstoffreste ersetzt sind, mit genau zwei Phenolharzeinheiten verknüpft sind.

Besonders bevorzugt ist ein erfindungsgemäß modifiziertes Phenolharz, herstellbar durch ein Verfahren, in dem freie Hydroxygruppen eines Phenolharzes mit einem Dialkyldialkoxysilan, vorzugsweise mit Diethoxydimethylsilan, so umgesetzt werden, dass das modifizierte Phenolharz resultiert.

Dabei ist besonders bevorzugt ein erfindungsgemäß (vorzugsweise vorstehend als bevorzugt bezeichnetes) modifiziertes Phenolharz, herstellbar durch ein Verfahren, in dem freie Hydroxygruppen eines high o,o'-Resols mit einem Dialkyldialkoxysilan, vorzugsweise mit Diethoxydimethylsilan so umgesetzt werden, dass das modifizierte Phenolharz resultiert.

Am meisten bevorzugt ist ein erfindungsgemäßes (vorzugsweise vorstehend als bevorzugt bezeichnetes) modifiziertes Phenolharz, herstellbar durch ein Verfahren, in dem freie Hydroxygruppen eines Phenol-Formaldehyd-high-o,o'-Resols mit einem Dialkyldialkoxysilan, vorzugsweise mit Diethoxydimethylsilan so umgesetzt werden, dass das modifizierte Phenolharz resultiert.

Die vorstehend definierten modifizierten Phenolharze zeichnen sich durch hohe Hitzebeständigkeit aus.

Ein weiterer Gegenstand der Erfindung betrifft ein Zweikomponenten-Bindemittelsystem, bestehend aus einer Phenolharz-Komponente und einer Polyisocyanat-Komponente, wobei die Polyisocyanat-Komponente ein Polyisocyanat mit mindestens zwei Isocyanat-Gruppen pro Molekül umfasst und die Phenolharz-Komponente eines der vorstehend definierten erfindungsgemäß modifizierten Phenolharze gemäß dem zweiten Aspekt der vorliegenden Erfindung umfasst. Vorzugsweise umfasst die Phenolharz-Komponente dabei eines der vorstehend beschriebenen neuen modifizierten Phenolharze gemäß dem zweiten Aspekt der vorliegenden Erfindung.

Es wurde überraschenderweise gefunden, dass Benzyletherharze (high o,o'-Resole) (welche typische Harze für die Anwendung als Grundharz im Cold-Box-Verfahren sind) sich mit Estern der Orthokieselsäure, in denen 1 oder 2 Alkoholreste durch substituierte oder unsubstituierte Kohlenwasserstoffreste ersetzt sind, insbesondere Diethoxydimethylsilan, zu modifizierten Phenolharzen mit hervorragenden, nicht erwarteten Eigenschaften umsetzen lassen.

Ein weiterer Gegenstand gemäß dem zweiten Aspekt der Erfindung betrifft deshalb ein Verfahren zur Herstellung eines modifizierten Phenolharzes, mit folgendem Schritt:
- Umsetzen eines Phenolharzes mit mindestens einem Ester der Orthokieselsäure, in dem 1, 2 oder 3 Alkoholreste durch substituierte oder unsubstituierte Kohlenwasserstoffreste ersetzt sind so dass ein modifiziertes Phenolharz resultiert, in dem Phenolharzeinheiten substituiert oder verknüpft sind durch Ester der Orthokieselsäure, in denen 1 oder 2 Alkoholreste durch substituierte oder unsubstituierte Kohlenwasserstoffreste ersetzt sind,.

Zur Reaktion (Umesterungsreaktion) der Kieselsäureester mit dem Phenolharz, zur Kernherstellung, zum Verfahren zur Herstellung einer gehärteten Gießereiform oder eines gehärteten Gießereikerns, zu den gehärteten Gießereiformen oder gehärteten Gießereikernen selbst, zu der Verwendung der Lösungen der erfindungsgemäßen Phenolharze und den Lösungen selbst gilt im Übrigen jeweils das für den ersten Aspekt Gesagte entsprechend (mit den notwendigen Abänderungen) beginnend ab Seite 10 mit den Worten "Die Umesterungsreaktion der Kieselsäureester mit dem Phenolharz", und endend auf Seite 21, mit den Worten "Dabei ist der Geruch bei der Herstellung der Gießereiform und Gießereikerne im Vergleich zu Standardsystemen deutlich reduziert" Der Begriff "Ester der Orthokieselsäure" ist dabei sinngemäß durch "Ester der Orthokieselsäure, in denen 1, 2 oder 3 Alkoholreste durch substituierte oder unsubstituierte Kohlenwasserstoffreste ersetzt sind" zu ersetzen. "Tetraethylester der Orthokieselsäure" ist sinngemäß durch "Tetraalkylester der Orthokieselsäure, in denen 1, 2 oder 3 Alkoholreste durch substituierte oder unsubstituierte Kohlenwasserstoffreste ersetzt sind" zu ersetzen. "TES" ist durch "Diethoxydimethylsilan" zu ersetzen, so weit es nicht als Lösungsmittel verwendet wird.

Ein konkretes Beispiel gemäß dem zweiten Aspekt der vorliegenden Erfindung für die Umsetzung eines Phenolharzes mit einem Ester der Orthokieselsäure, in dem 1, 2 oder 3 Alkoholreste durch substituierte oder unsubstituierte Kohlenwasserstoffreste ersetzt sind, ist nachstehend als Beispiel 5 angegeben.

Der zweite Aspekt der vorliegenden Erfindung betrifft somit - wie erwähnt - insbesondere die Verwendung eines modifizierten Phenolharzes als
- Bindemittel oder Bestandteil eines Bindemittels, insbesondere zum Binden von Gießereiformstoffen,
darüber hinaus aber auch die Verwendung als
- Bindemittel für Dämmstoffe, insbesondere als Bindemittel für Glasfaserdämmstoffe,
- Formstoff oder Bestandteil eines Formstoffs, insbesondere als technisches Harz, zum Beispiel als Schleifscheibenharz und/oder als Verbundstoff
- Isolator oder Bestandteil eines Isolators, insbesondere als elektrischer Isolator oder als Bestandteil davon und bevorzugt als Basismaterial zur Herstellung von Leiterplatten (Platinen), als Isolierung von Leiterplatten oder als Isolierung von Halbleiterelementen oder anderen Bauelementen die in der Halbleiterindustrie Verwendung finden, oder als
- Lack oder Bestandteil eines Lacks,
wobei das modifizierte Phenolharz Phenolharzeinheiten umfasst, die substituiert und/oder verknüpft sind durch Ester der Orthokieselsäure, in denen 1, 2 oder 3 Alkoholreste durch substituierte oder unsubstituierte Kohlenwasserstoffreste ersetzt sind. Es gilt jeweils das oben Gesagte entsprechend.

### Allgemeine Hinweise

Die Gliederung der vorliegenden Anmeldung in einzelne Aspekte, bevorzugte Ausführungsformen und Gegenstände soll nicht dazu dienen, die in diesen Aspekten, Ausführungsformen und Gegenständen beschriebenen Anwendungen allein auf diesen Aspekt, diese Ausführungsform oder diesen Gegenstand zu beziehen. Viele Anwendungen und damit entsprechende Verwendungen, Verfahren und modifizierte Phenolharze sind mittels des erfindungsgemäßen Verfahrens auch mit anderen Merkmalen ausführbar, als in der jeweils bevorzugten Ausführungsform beschrieben. Regelmäßig lassen sich die entsprechenden Einsatzmöglichkeiten auch über die jeweils bevorzugte erfindungsgemäße Ausführungsform hinaus im Rahmen der allgemeinsten Form der Erfindung verallgemeinern, so dass die unter dem jeweiligen Aspekt, der jeweiligen bevorzugten Ausführungsform oder dem Gegenstand beschriebenen Merkmalskombinationen lediglich eine bevorzugte Variante des erfindungsgemäßen Gedankens darstellen. Darüber hinaus ist es dem Fachmann klar, dass auch die Aspekte, Ausführungsformen und Gegenstände bzw. einzelne Maßnahmen/Merkmale der einzelnen Aspekte, Ausführungsformen und Gegenstände miteinander kombinierbar sind, je nach Ziel der Anwendung. Manche erfindungsgemäße Phenolharze, Verwendungen oder Verfahren erfüllen auch die Merkmale/Funktionen von mehr als einer bevorzugten Ausführungsform gleichzeitig.

Die Erfindung wird nachfolgend anhand von Beispielen näher erläutert:

### Beispiele:

Im Folgenden stehen die Abkürzungen "GT" für Gewichtsteile, "MDI" für Methylen-bis-(phenylisocyanat), TES für Tetraethylsilikat und "PTS" für Paratoluolsulfonsäure.

Der Sandarten "H32" und "H33" sind erhältlich von der Firma Quarzwerke in 50226 Frechen, Deutschland.

### Analytische Methoden:

### Rückstandsbestimmung

Zur Rückstandsbestimmung werden 2 g eines Harzes unter normaler Atmosphäre in einen auf 1000°C vorgeheizten Muffelofen eingebracht und bis zur Gewichtskonstanz bei dieser Temperatur gehalten. Der Rückstand wird gewogen.

### Bestimmung der OH-Zahl

0,8g - 1,2g Phenolharz werden auf 0,1 mg genau in einen 250 ml Rundkolben eingewogen. Das Probenmaterial wird vor der Einwaage in der Mikrowelle so lange erwärmt, bis das Harz leicht durchmischbar ist (ca. 30-60 s). Es wird mit 10 ml eines Gemisches aus 78,5 ml Pyridin und 21,5 ml Essigsäureanhydrid versetzt. Die Proben werden mittels Heizpilz unter Rückfluss auf 100 ± 1 °C erwärmt und 1 Stunde bei dieser Temperatur gehalten. Man lässt die Proben langsam auf Raumtemperatur abkühlen, ohne eine zusätzliche Kühlung zu verwenden. Durch den Kühler werden 5 ml o-Dichlorbenzol und 5 ml Wasser zugegeben, danach lässt man die Mischung erneut kurz abkühlen (1 bis 2 Minuten). Mit 25 ml Pyridin wird der Kühler ausgespült, das Spülpyridin wird dabei in den Acetylierungskolben laufen gelassen. Es wird Phenolphthalein zugesetzt und mit 1 mol/l NaOH auf beginnende Rotfärbung titriert (Rührwerk). Die Titration wird zusätzlich mit einem pH-Meter überwacht. Bei Erreichen des Endpunktes wird ein pH-Sprung deutlich, der bei pH 10,5-11,0 einsetzt. Es wird außerdem ein Blindversuch ohne Phenolharz durchgeführt. Die OH-Zahl wird nach der folgenden Formel berechnet: OH - Zahl = (Verbrauch NaOH im Blindversuch (ml) - Verbrauch NaOH der Probe (ml)) * 56,109/ Einwaage des Phenolharzes (g)

Von den im Folgenden aufgeführten Beispielen 1 bis 5 betrifft Beispiel 3 den ersten Aspekt der vorliegenden Erfindung und Beispiel 5 den zweiten Aspekt der vorliegenden Erfindung.

### Beispiel 1 (Vergleichsbeispiel):

Herstellung eines mit TES umgesetzten o-Kresol-Phenol-Novolaks (Harz A, nicht erfindungsgemäß)

### Schritt 1: Herstellung eines o-Kresol-Phenol-Novolaks

In einen mit Rückflusskühler, Thermometer und Rührer ausgestatteten Reaktionsgefäß werden 81 GT Phenol, 105 GT o-Kresol, 23,5 GT Formalin (49 Gew.-% Formaldehyd) und 0,8 GT Oxalsäure vorgelegt. Unter Rühren wird das Gemisch auf 100°C erwärmt und so lange bei dieser Temperatur gehalten, bis der Gehalt an freiem Formaldehyd unter 0,2 Gew.-% gefallen ist (Dauer: ca. 3-4 Stunden). Dann werden die flüchtigen Bestanteile unter Erwärmung auf 160°C bei Atmosphärendruck und danach bei 180°C und 2 kPa (20mbar) abdestilliert. Die Ausbeute beträgt ca. 83%.

### Schritt 2: Silylierung des Novolaks

400 GT des in Schritt 1 hergestellten Harzes werden mit 100 GT Tetraethylsilikat bei 120°C gemischt. Nach Zugabe von 0,5 GT Paratoluolsulfonsäure-Monohydrat wird in 10 Minuten auf 130°C angeheizt und in 60 Minuten bis 160°C atmosphärisch destilliert. Anschließend wird bei 160°C in 10 Minuten der Druck stufenweise bis 10 kPa (100 mbar) reduziert und weitere 10 Minuten bei 10 kPa (100 mbar) destilliert. (Destillat: ca. 40GT) Schließlich wird bei 130°C mit einer gamma-Aminopropyltriethoxysilan-Lösung (1%ig in Tetraethylsilikat) stöchiometrisch neutralisiert. 1 GT des erhaltenen Produkts wird in 1GT Tetraethylsilikat gelöst. Die erhaltene Lösung des modifizierten Phenolharzes wird nachfolgend als Harz A bezeichnet.

### Beispiel 2 (Vergleichsbeispiel):

Herstellung eines mit TES umgesetzten Phenol-Novolaks (Harz B, nicht erfindungsgemäß)

### Schritt 1: Herstellung des Phenol-Novolaks (Grundharz; im folgenden Harz F genannt; nicht erfindungsgemäß)

In einen mit Rückflusskühler, Thermometer und Rührer ausgestatteten Reaktionsgefäß werden 94 GT Phenol, 33,7 GT Formalin (49 Gew.-% Formaldehyd) und 1,2 GT Oxalsäure vorgelegt. Unter Rühren wird das Gemisch auf 100°C erwärmt und so lange bei der Temperatur gehalten, bis der Gehalt an freiem Formaldehyd unter 0,2 Gew.-% gefallen ist. Dann werden die flüchtigen Bestanteile unter Erwärmung auf 170°C bei Atmosphärendruck und danach bei 180°C und 2 kPa (20mbar) abdestilliert. Die Ausbeute beträgt ca. 60%. Dieses Harz wird nachfolgend als Harz F bezeichnet.

Die Rückstandsbestimmung ergibt 10 mg (0,5 %) eines weißen Rückstands.

### Schritt 2: Silylierung des Novolaks

400 GT des im Schritt 1 hergestellten Phenol-Novolaks (Harz F) werden mit 100 GT Tetraethylsilikat bei 130°C gemischt. Nach Zugabe von 0,25 GT Paratoluolsulfonsäure-Monohydrat wird die Temperatur konstant gehalten. Nach 40 Minuten beginnt das Gemisch bei 130°C und Normaldruck zu destillieren. Nach weiteren 10 Minuten wird der Druck gleichmäßig in 40 Minuten bis 6,5 kPa (65mbar) gesenkt und die Temperatur dabei konstant gehalten, wobei die flüchtigen Bestandteile abdestilliert werden. Danach wird das Produkt, ein modifiziertes Phenolharz, ausgegossen, erkalten gelassen und gebrochen; es wird nachfolgend als Harz B bezeichnet.

### Beispiel 3:

Herstellung eines mit TES umgesetzten high o,o'-Resols (Harz C, erfindungsgemäß)

### Schritt 1: Herstellung des high o,o'-Resols

In einem mit Rückflusskühler, Thermometer und Rührer ausgestatteten Reaktionsgefäß werden 234 GT Phenol, 107 GT Paraformaldehyd (91 Gew.-% Gehalt an Paraformaldehyd), und 0,30 GT Zinkacetat Dihydrat vorgelegt. Unter Rühren wird die Temperatur gleichmäßig in 90 Minuten auf 110°C erhöht und für 45 Minuten bei 110°C gehalten. Es wird auf 120°C erwärmt und bei vermindertem Druck < 3 kPa (<30mbar) destilliert, bis der Destillationsrückstand einen Brechungsindex von n_{D20} = 1,613 bis 1,615 hat. Die Ausbeute beträgt ca. 80%.

### Schritt 2: Silylierung und Veretherung des high o,o'-Resols

100 GT des in Schritt 1 hergestellten high o,o'-Resols und 100 GT TES werden bei 90°C gemischt. Man erhält eine weiße Emulsion. Hierzu werden 10 GT Ethanol (Wasser<0,03 Gew.-%) gegeben, so dass die Lösung nur noch eine schwache Trübung aufweist. Zu diesem Ansatz werden 0,56 GT einer 65 gewichtsprozentigen Lösung von Paratoluolsulfonsäure in Wasser gegeben. Die Temperatur wird 30 Minuten gehalten und der Ansatz schließlich mit 0,42 GT Gamma-Aminopropyltriethoxysilan neutralisiert. Es wird schließlich bei 7 kPa (70 mbar) bis zu einer Temperatur von 80 °C im Sumpf destilliert. Die Ausbeute beträgt ca. 81 %. Der pH-Wert des Produktes ist 6,4 (zur Bestimmung der pH-Werte siehe oben).

100 GT des erhaltenen Produkts, ein erfindungsgemäßes modifiziertes Phenolharz, werden mit 30 GT Tetraethylsilikat versetzt. Die erhaltene Lösung wird nachfolgend als Harz C bezeichnet.

Harz C hat eine OH-Zahl von 244 mg KOH/g Harz. Die Rückstandsbestimmung ergibt 182 mg (9,1 %) eines weißen Rückstands (im Wesentlichen amorphes SiO₂).

### Beispiel 4 (Vergleichsbeispiel):

Herstellung eines mit TES umgesetzten Resols (nicht erfindungsgemäß)

### Schritt 1: Herstellung des Resols

In einem mit Rückflusskühler, Thermometer und Rührer ausgestatteten Reaktionsgefäß werden 100 GT Phenol, 36 GT Paraformaldehyd (91 Gew.-% Gehalt an Paraformaldehyd), und 0,63 GT Natronlauge (33 Gew.-%) vorgelegt. Die Anlage wird so eingestellt, dass destillierende Flüssigkeit in den Kolben zurückgeführt wird. Unter Rühren wird die Temperatur gleichmäßig in 90 Minuten auf 85°C erhöht. Sobald das Paraformaldehyd vollständig in Lösung gegangen ist (bei ca. 80°C), ist mit einer exothermen Reaktion zu rechen. Durch Reduzieren des Drucks in der Anlage auf 20 kPa (200 mbar) siedet das Gemisch unter Rückflussbedingungen und die entstehende Energie kann so abgeführt werden. Gegebenenfalls muss der Kolben mit kaltem Wasser gekühlt werden. Die Temperatur wird bei 85°C so lange gehalten, bis der Gehalt an freiem Formaldehyd auf weniger als 2 Gew.-% gefallen ist (Dauer ca. 90 Minuten). Es wird auf eine Temperatur von 50°C gekühlt und durch langsame Zugabe von insgesamt 1 GT Paratoluolsulfonsäure (65 Gew.-% in Wasser) bis zu einem pH-Wert von ca. 5,9 neutralisiert. Es werden 20 GT 2-Propanol zugegeben. Bei einem verminderten Druck von 5 kPa (50 mbar) wird bis zu einer Temperatur von 90°C azeotrop destilliert. Der Wassergehalt im Gemisch liegt nun bei unter 1 Gew.-%. Die Ausbeute beträgt ca. 81 Gew.-%.

### Schritt 2: Silylierung des Resols

100 GT des in Schritt 1 hergestellten Resols, 75 GT Ethanol (Wasser<0,03 Gew.-%) und 100 GT TES werden gemischt und die Temperatur auf 80°C eingestellt. Die Lösung weist eine schwache Trübung auf. Zu diesem Ansatz werden 0,40 GT einer 65 gewichtsprozentigen Lösung von Paratoluolsulfonsäure in Wasser gegeben. Die Temperatur wird 30 Minuten gehalten und der Ansatz schließlich mit 0,30 GT Gamma-Aminopropyltriethoxysilan neutralisiert. Es wird schließlich bei 7 kPa (70 mbar) bis zu einer Temperatur von 90 °C im Sumpf destilliert.

100 GT des erhaltenen Produkts, ein modifiziertes Phenolharz, werden mit 25 GT Tetraethylsilikat versetzt. Man erhält eine zur Verwendung geeignete Lösung.

Die Rückstandsbestimmung ergibt 326 mg (16,3 %) eines weißen Rückstands (im Wesentlichen amorphes SiO₂).

### Beispiel 5:

Herstellung eines mit Diethoxydimethylsilan umgesetzten high o,o'-Resols (Harz G, erfindungsgemäß)

### Schritt 1: Herstellung des high o,o'-Resols gemäß Beispiel 3, Schritt 1

### Schritt 2: Silylierung des high o,o'-Resols mit Diethoxydimethylsilan

100 GT des in Schritt 1 hergestellten high o,o'-Resols und 74 GT Diethoxydimethylsilan werden bei 80°C gemischt. Man erhält eine weiße Emulsion. Hierzu werden 10 GT Ethanol (Wasser<0,03 Gew.-%) gegeben, so dass die Lösung nur noch eine schwache Trübung aufweist. Zu diesem Ansatz werden 0,61 GT einer 65 gewichtsprozentigen Lösung von Paratoluolsulfonsäure in Wasser gegeben. Die Temperatur wird 30 Minuten gehalten und der Ansatz schließlich mit 0,42 GT Gamma-Aminopropyltriethoxysilan neutralisiert. Es wird schließlich bei 7 kPa (70 mbar) bis zu einer Temperatur von 90 °C im Sumpf destilliert.

100 GT des erhaltenen Produkts, ein erfindungsgemäßes modifiziertes Phenolharz, werden mit 34 GT Tetraethylsilikat gegeben. Die erhaltene Lösung wird nachfolgend als Harz H bezeichnet.

Die Rückstandsbestimmung ergibt 138 mg (6,9 %) eines weißen Rückstands (im Wesentlichen amorphes SiO₂).

### Referenzharze:

Zur Durchführung von Vergleichsversuchen in den anwendungstechnischen Beispielen werden nicht erfindungsgemäße Referenzharze benötigt. Die Darstellung erfolgt wie nachstehend beschrieben:

### Harz D:

Es wird ein high o,o'-Resol gemäß Beispiel 3, Schritt 1 hergestellt. 100 GT des erhaltenen Produkts, werden mit 37 GT Dibasische Estermischung (DBE), 37 GT Propylencarbonat und 7 GT Isopropyllaurat vermischt. Die erhaltene Lösung ist Harz D.

### Harz E:

Es wird ein high o,o'-Resol gemäß Beispiel 3, Schritt 1 hergestellt. 100 GT des erhaltenen Produkts, werden mit 50 GT Tetraethylsilikat und 20 GT Dibasische Estermischung (DBE) vermischt. Die erhaltene Lösung ist Harz E. Harz E hat eine OH-Zahl von 366 mg KOH/g Harz.

### Harz F:

Als Harz F wird das Produkt aus Beispiel 2, Schritt 1 verwendet.

### Anwendungstechnische Beispiele

### Anwendungstechnisches Beispiel 1: Kerntechnische Werte

Gemäß der folgenden Tabelle 1 wurden Sandmischungsbeispiele zur Anwendung im Cold-Box-Verfahren hergestellt:

**Tabelle 1**

| | **Sand** | | **Harz** | | **Polyisocyanat** | |
|---|---|---|---|---|---|---|
| **Mischung** | **GT** | **Name** | **GT** | **Name** | **GT** | **Name** |
| 1 | 100 | H32 | 0,70 | Harz A | 0,70 | Aktivator A |
| 2 | 100 | H32 | 0,80 | Harz A | 0,60 | Aktivator A |
| 3 | 100 | H32 | 0,90 | Harz A | 0,50 | Aktivator A |
| 4 | 100 | H32 | 1,00 | Harz A | 0,40 | Aktivator A |
| 5 | 100 | H32 | 0,70 | Harz C | 0,70 | Aktivator A |
| 6 | 100 | H32 | 0,80 | Harz C | 0,60 | Aktivator A |
| 7 | 100 | H32 | 0,90 | Harz C | 0,50 | Aktivator A |
| 8 | 100 | H32 | 1,00 | Harz C | 0,40 | Aktivator A |
| 9 | 100 | H32 | 1,10 | Harz C | 0,30 | Aktivator A |
| 10 | 100 | H32 | 0,80 | Harz E | 0,6 | Aktivator A |
| 11 | 100 | H32 | 0,80 | Harz G | 0,6 | Aktivator A |

Aktivator A ist eine Mischung aus 90 GT Polymeres Diphenylmethandiisocyanat ("Lupramat M20S"), 7 GT Tetraethylsilikat, 3 GT Dioctyladipat und 0,3 GT Phosphorylchlorid.

Aus den so hergestellten Mischungen werden Prüfkörper hergestellt, deren kerntechnische Werte (Biegefestigkeit) gemessen wurden. Die Ergebnisse sind in Tabelle 2 zusammengefasst:

**Tabelle 2:**

| | | | | | | | | | | | | | | | | | | | |
|---|---|---|---|---|---|---|---|---|---|---|---|---|---|---|---|---|---|---|---|
| Vergleich der Biegefestigkeiten in N/cm² der aus den Mischungen gemäß Tabelle 1 hergestellten Prüfkörper (Anwendung im Cold-Box-Verfahren) | | | | | | | | | | | | | | | | | | | |

| **Mischung** | **Sofortbiegefestigkeiten** | | | **1 Stundenbiegefestigkeiten** | | | **6 Stundenbiegefestigkeiten** | | | **A-Kerne** | | **B-Kerne** | | **C-Kerne** | **D-Kerne** | **E-Kerne** | | **F-Kerne** | |
|---|---|---|---|---|---|---|---|---|---|---|---|---|---|---|---|---|---|---|---|
| | sof. | 1h | 24h | sof. | 1h | 24h | sof. | 1h | 24h | 1d | 2d | 1d | 2d | | | 1d | 2d | 1d | 2d |
| 1 | 200 | 410 | 470 | 180 | 390 | 420 | 150 | 310 | 350 | 420 | 440 | 380 | 420 | 560 | 540 | 320 | 350 | 410 | 350 |
| 2 | 230 | 370 | 420 | 220 | 330 | 360 | 180 | 290 | 290 | 400 | 390 | 380 | 400 | 560 | 530 | 240 | 270 | 370 | 270 |
| 3 | 240 | 320 | 370 | 190 | 290 | 330 | 160 | 230 | 250 | 360 | 380 | 300 | 380 | 460 | 430 | 310 | 320 | 360 | 320 |
| 4 | 210 | 290 | 320 | 180 | 240 | 280 | 140 | 200 | 210 | 350 | 340 | 310 | 340 | 390 | 400 | 270 | 280 | 300 | 280 |
| 5 | 160 | 360 | 440 | 160 | 370 | 400 | 120 | 280 | 330 | 370 | 310 | 400 | 380 | 470 | 520 | 330 | 320 | 380 | 363 |
| 6 | 200 | 340 | 400 | 190 | 310 | 340 | 150 | 250 | 270 | 340 | 350 | 370 | 360 | 450 | 480 | 380 | 290 | 370 | 280 |
| 7 | 200 | 310 | 340 | 190 | 280 | 300 | 130 | 190 | 210 | 340 | 340 | 330 | 320 | 410 | 400 | 260 | 230 | 330 | 240 |
| 8 | 190 | 260 | 270 | 160 | 220 | 220 | 110 | 160 | 160 | 250 | 250 | 260 | 380 | 360 | 350 | 190 | 190 | 260 | 210 |
| 9 | 130 | 170 | 160 | 120 | 150 | 130 | 89 | 90 | 90 | 150 | 140 | 160 | 160 | 310 | 280 | 120 | 130 | 130 | 120 |
| 10 | 210 | 340 | 390 | 180 | 340 | 360 | 110 | 260 | 270 | 400 | 410 | 370 | 390 | 520 | 460 | 380 | 370 | 360 | 370 |
| 11 | 200 | 380 | 420 | 120 | 260 | 300 | | | | | | | | | | | | | |

| | | | | | | | | | | | | | | | | | | | |
|---|---|---|---|---|---|---|---|---|---|---|---|---|---|---|---|---|---|---|---|
| *) festigkeitswerde nach 3 Stunden Sandlagerung bestimmt | | | | | | | | | | | | | | | | | | | |

In der vorstehenden Tabelle 2 haben die Einträge in den Spalten folgende Bedeutungen:
- Spalte 1: Laufende Nummern der Mischungen wie in Tabelle 1.
- Sofortbiegefestigkeiten (sof., 1 h, 24 h): Die Sandmischung wird sofort nach der Herstellung verarbeitet. Die Prüfung erfolgt sofort, nach 1 Stunde und nach 24 Stunden Kernlagerung.
- 1 Stundenbiegefestigkeiten (sof., 1 h, 24 h): Die Sandmischung wird eine Stunde nach der Herstellung verarbeitet. Die Prüfung erfolgt sofort, nach 1 Stunde und nach 24 Stunden Kernlagerung.
- 6 Stundenbiegefestigkeiten (sof., 1 h, 24 h): Die Sandmischung wird 6 Stunden nach der Herstellung verarbeitet. Die Prüfung erfolgt sofort, nach 1 Stunde und nach 24 Stunden Kernlagerung.
- A-Kerne (1d): Die Kerne werden einen Tag im Digistor bei RT gelagert. Am nächsten Tag werden sie in Wasserschlichte getaucht, im Digistor bei RT luftgetrocknet und nach einem weiteren Tag geprüft.
- A-Kerne (2d): Die Kerne werden einen Tag im Digistor bei RT gelagert. Am nächsten Tag werden sie in Wasserschlichte getaucht, im Digistor bei RT luftgetrocknet und nach 2 Tagen geprüft.
- B-Kerne (1d): Die Kerne werden sofort in Wasserschlichte getaucht, im Digistor bei RT luftgetrocknet und nach einem Tag geprüft.
- B-Kerne (2d): Die Kerne werden sofort in Wasserschlichte getaucht, im Digistor bei RT luftgetrocknet, nach 2 Tagen geprüft.
- C-Kerne: Die Kerne werden einen Tag im Digistor bei RT gelagert. Am nächsten Tag werden sie in Wasserschlichte getaucht, eine Stunde bei 150 °C im Ofen getrocknet und nach Erkalten auf RT geprüft.
- D-Kerne: Die Kerne werden sofort in Wasserschlichte getaucht, eine Stunde bei 150 °C im Ofen getrocknet und nach Erkalten auf RT geprüft.
- E-Kerne (1d): Die Kerne werden einen Tag im Digistor bei RT gelagert. Dann werden sie bei 100 % relativer Luftfeuchtigkeit für einen Tag gelagert und nach Entnahme umgehend geprüft.
- E-Kerne (2d): Die Kerne werden einen Tag im Digistor bei RT gelagert. Dann werden sie bei 100 % relativer Luftfeuchtigkeit für zwei Tage gelagert und nach Entnahme umgehend geprüft.
- F-Kerne (1d): Die Kerne werden sofort bei 100 % relativer Luftfeuchtigkeit für einen Tag gelagert und nach Entnahme umgehend geprüft.
- F-Kerne (2d): Die Kerne werden sofort bei 100 % relativer Luftfeuchtigkeit für zwei Tage gelagert und nach Entnahme umgehend geprüft.

### Anwendungstechnisches Beispiel 2: Gasentwicklungs-Untersuchung (Gasdruckmessung)

Gasentwicklungs-Untersuchung in Aluminium (Anwendung im Cold-Box-Verfahren)

Gasdruckmessungen wurden gemäß der Vorschrift von H. Gerard Levelink et al, Gießerei 67 (1980) Nr. 5, Seite 110 "Untersuchungsverfahren" durchgeführt.

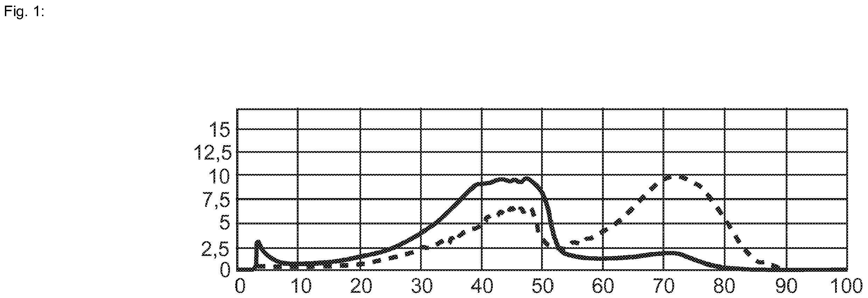

Bei der Gasdruckmessung wird somit ein Prüfkörper aus einer Mischung aus Sand, Harz und Polyisocyanat gefertigt und anschließend bei 800°C in flüssiges Aluminium eingetaucht. Der Druck p (in Millibar) des entstehenden Gases in diesem Prüfkörper wird über ein eingebettetes Rohr gemessen und gegen die Zeit t (in Sekunden) aufgetragen. Das Ergebnis ist in Figur 1 dargestellt.

Es werden Harz C, gemäß Beispiel 3, und das nicht erfindungsgemäße Harz D miteinander verglichen. Hierzu wird eine Mischung aus 100 GT Sand H32, 0,9 GT Harz C und 0,6 GT polymeres Diphenylmethandiisocyanat ("Lupramat M20S") zu einem Prüfkörper verarbeitet. Des Weiteren wird eine Referenzmischung aus 100 GT Sand H32, 0,7 GT Harz D und 0,7 GT Aktivator B zu einem Prüfkörper verarbeitet. Aktivator B ist eine Mischung aus 80 GT polymerem Diphenylmethandiisocyanat ("Lupramat M20S"), 20 GT Solvesso 150 und 0,3 GT Phosphorylchlorid.

Die Ergebnisse sind in Figur 1 dargestellt. Die Abszisse gibt die Zeit in Sekunden an und die Ordinate den Gasdruck in Millibar. Die durchgezogene Kurve zeigt die Messwerte für das erfindungsgemäße Harz C. Die gestrichelte Kurve zeigt die Messwerte für das nicht erfindungsgemäße Harz D.

Bei dem herkömmlichen System (Harz D) entstehen zwei Gasstöße. Bei dem erfindungsgemäßen Harz C hingegen ist nur ein Gasstoß vorhanden, ein zweiter Gasstoß bleibt aus.

### Anwendungstechnisches Beispiel 3: Thermogravimetrische Analyse (TGA)

Thermogravimetrische Analysen (TGA) wurden mit einem Gerät der Firma Perkin Elmer vom Typ TGA 7 durchgeführt. Es wurde die Software "Pyris Basis" und "Kinetikmodul" verwendet.

Zur Probenvorbereitung werden Phenolharz und Polyisocyanat gemischt. Es werden einige Tropfen der Mischung auf eine glatte Oberfläche kreisförmig (Durchmesser ca. 5cm) aufgetragen und gasförmiges Dimethylisopropylamin darüber geleitet. Die gebildete Folie wird mit einer Pinzette abgenommen, durch Abtupfen mit einem saugfähigen, nicht fuselnden Papier von flüssigem Binder befreit und nochmals vollständig mit gasförmigem Amin umspült. Es wird ein ca. 1cm breiter Streifen dieser Folie ausgeschnitten und gefaltet, so dass eine ca. 8 mg schwere Probe entsteht, die per TGA vermessen wird. Harz C (gemäß Beispiel 3) wurde mit Aktivator A im Gewichtsverhältnis 3 zu 2 über Amin ausgehärtet und das Produkt mit Hilfe der thermogravimetrischen Analyse vermessen. Als Referenz diente Harz E mit Aktivator A ebenfalls im Gewichtsverhältnis 3 zu 2. Zur Messung wurden die Proben unter Stickstoff mit einer Aufheizgeschwindigkeit von 30 °C pro Minute auf 1000 °C aufgeheizt.

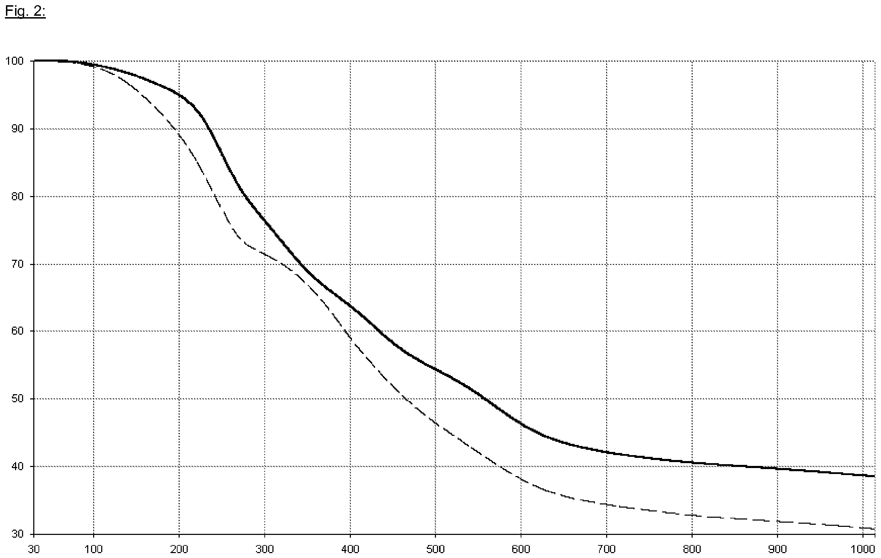

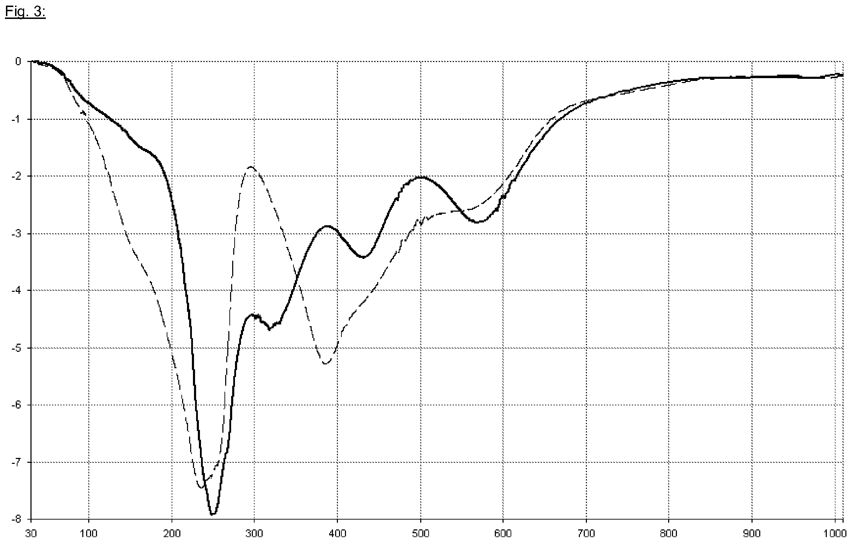

Die Ergebnisse sind in Figuren 2 und 3 dargestellt. Figur 2 zeigt die Abnahme der Masse der Probe mit steigender Temperatur bei einer Heizrate von 30 °C pro Minute. Auf der Abszisse ist die Temperatur in Grad Celsius aufgetragen. Auf der Ordinate ist die Masse der Probe in Gewichtsprozent der anfänglichen Masse aufgetragen. Die durchgezogene Kurve zeigt die Messwerte für die Folie, die mit dem erfindungsgemäßen Harz C hergestellt wurde. Die gestrichelte Kurve zeigt die Messwerte für die Folie, die mit dem nicht erfindungsgemäßen Harz E hergestellt wurde.

Folgende Ergebnisse lassen sich aus Figur 2 ablesen:
1. Das nicht erfindungsgemäße Harz E erleidet bereits einen deutlichen Masseverlust bei Temperaturen zwischen 100 und 200°C, während das erfindungsgemäße Harz C erst bei über 200°C deutliche Masseverluste aufweist. Das erfindungsgemäße Harz C ist also thermisch beständiger als das nicht erfindungsgemäße Harz E.
2. Der Gesamtmasseverlust bei Verwendung des nicht erfindungsgemäßen Harzes E ist im gesamten Bereich der Temperaturen über 100°C höher als der Masseverlust bei Verwendung des erfindungsgemäßen Harzes C. Bei 1000°C sind bei Verwendung des nicht erfindungsgemäßen Harzes E etwa 69 % der Probe in den gasförmigen Zustand übergegangen, bei Verwendung des erfindungsgemäßen Harzes C etwa 61 %. Im Vergleich bedeutet dies, dass in erfindungsgemäßen Gießereiformen und -kernen im Vergleich zu herkömmlichen Systemen 26% mehr Rückstand verbleibt. Daraus folgt, dass die Gesamtgasemission deutlich gesenkt ist.

Figur 3 zeigt den Masseverlust der Probe pro Zeiteinheit in Abhängigkeit von der Temperatur. Diese Kurve ist die Ableitung der Kurve aus Figur 2 nach der Zeit. Auf der Abszisse ist die Temperatur in Grad Celsius aufgetragen. Auf der Ordinate ist der Verlust der Masse der Probe pro Zeiteinheit in Gewichtsprozent der anfänglichen Masse der Probe pro Minute aufgetragen. Die durchgezogene Kurve zeigt die Messwerte für die Folie, die mit dem erfindungsgemäßen Harz C hergestellt wurde. Die gestrichelte Kurve zeigt die Messwerte für die Folie, die mit dem nicht erfindungsgemäßen Harz E hergestellt wurde.

Hier sieht man noch einmal deutlich, dass das nicht erfindungsgemäße Harz E bereits bei Temperaturen zwischen 100 und 200°C einen starken Masseverlust erleidet, während das erfindungsgemäße Harz C erst bei Temperaturen über 200°C starke Masseverluste aufweist. Bei Verwendung des erfindungsgemäßen Harz C ist der Masseverlust darüber hinaus bei Temperaturen zwischen 250 und 800°C deutlich gleichmäßiger als bei Verwendung des nicht erfindungsgemäßen Harz E. Dies führt zu geringeren Schwankungen des Gasdrucks und dies wiederum zu einer Verringerung der Anzahl der Gasfehler.

### Anwendungstechnisches Beispiel 4: Anwendungstechnische Prüfung im Maskenformverfahren

### Sandmischungsbeispiel (Maskenformverfahren)

3kg Sand (H33) wurden mit 90g des vorstehend beschriebenen Harzes B (Beispiel 2, nicht erfindungsgemäß) bei ca. 130°C gemischt. Dann wurden 27 g einer 35%igen Hexamethylentetramin-Lösung (Vernetzer) und anschließend 6 g Kalziumstearat (Trennmittel) zugegeben. Die Sandmischung für Harz F wurde nach der gleichen Vorschrift mit den gleichen Mengenverhältnissen hergestellt. Aus den Sandmischungen wurden GF-Prüfkörper gemäß VDG-Merkblatt P 74 (Herausgeber "Verein Deutscher Gießereifachleute", 2. Ausgabe, März 1976) hergestellt und geprüft. Für das Harz B wurden jeweils zwei Versuche durchgeführt.

**Tabelle 3:**

| **Biegeriegel** | **Harz B (modifiziert)** | | **Harz F** |
|---|---|---|---|
| | **Versuch 1** | **Versuch 2** | |
| Maskenformverfahren GF-Prüfkörper: Biegeriegel wird 2 Minuten bei 220°C ausgehärtet und sofort im heißen Zuausgehärtet und sofort im heißen Zustand geprüft. | 360 N/cm² | 380 N/cm² | 260 N/cm² |
| Maskenformverfahren GF-Prüfkörper: Biegeriegel wird 1 Minute bei 220°C ausgehärtet und sofort im heißen Zustand geprüft. | 270 N/cm² | 290 N/cm² | 220 N/cm² |
| Maskenformverfahren GF-Prüfkörper: Biegeriegel wird 2 Minuten bei 220°C ausgehärtet und nach Erkalten geprüft. | 1000 N/cm² | 900 N/cm² | 1100 N/cm² |
| Maskenformverfahren GF-Prüfkörper: Biegeriegel wird 1 Minute bei 220°C ausgehärtet und nach Erkalten geprüft. | 830 N/cm² | 830 N/cm² | 840 N/cm² |
| Geruch im Vergleich zu Standardsystemen | reduziert | reduziert | geruchsintensiv |

## Patentansprüche

1. Verwendung eines modifizierten Phenolharzes als
Bindemittel oder Bestandteil eines Bindemittels im Cold-Box-Verfahren oder Polyurethan-Nobake-Verfahren,
(a) wobei das modifizierte Phenolharz
Phenolharzeinheiten umfasst, die substituiert und/oder verknüpft sind durch Ester der Orthokieselsäure, der Dikieselsäure und/oder einer oder mehrerer Polykieselsäuren
und/oder
herstellbar ist durch Umsetzung freier Hydroxygruppen eines Phenolharzes mit einem oder mehreren Estern der Orthokieselsäure, der Dikieselsäure und/oder einer oder mehrerer Polykieselsäuren,
wobei das modifizierte Phenolharz high o,o'-Resol-Einheiten umfasst,
oder
(b) wobei das modifizierte Phenolharz
Phenolharzeinheiten umfasst, die substituiert und/oder verknüpft sind durch Ester der Orthokieselsäure, in denen 1, 2 oder 3 Alkoholreste durch substituierte oder unsubstituierte Kohlenwasserstoffreste ersetzt sind,
und/oder
herstellbar ist durch Umsetzung freier Hydroxygruppen eines Phenolharzes mit einem oder mehreren Estern der Orthokieselsäure, in denen 1, 2 oder 3 Alkoholreste durch substituierte oder unsubstituierte Kohlenwasserstoffreste ersetzt sind,
wobei das modifizierte Phenolharz high o,o'-Resol-Einheiten umfasst.

2. Verwendung nach Anspruch 1, wobei das modifizierte Phenolharz high o,o'-Resol-Einheiten umfasst, wobei einzelne, mehrere oder sämtliche der Phenolharzeinheiten high o,o'-Resol-Einheiten sind.

3. Verwendung nach einem der vorhergehenden Ansprüche, wobei das modifizierte Phenolharz Phenolharzeinheiten umfasst, die verknüpft sind
(i) durch Ester der Orthokieselsäure
bzw.
(ii) durch Ester der Orthokieselsäure, in denen 1 oder 2 Alkoholreste durch substituierte oder unsubstituierte Kohlenwasserstoffreste ersetzt sind.

4. Verwendung nach einem der vorhergehenden Ansprüche, wobei das modifizierte Phenolharz herstellbar ist durch ein Verfahren, in dem freie Hydroxygruppen eines Phenolharzes
(i) mit einem Tetraalkylester der Orthokieselsäure,
bzw.
(ii) mit einem Dialkyldialkoxysilan,
so umgesetzt werden, dass das modifizierte Phenolharz resultiert.

5. Verwendung nach einem der vorhergehenden Ansprüche, wobei das modifizierte Phenolharz herstellbar ist durch ein Verfahren, in dem freie Hydroxygruppen eines high o,o'-Resols
(i) mit einem Tetraalkylester der Orthokieselsäure,
bzw.
(ii) mit einem Dialkyldialkoxysilan,
so umgesetzt werden, dass das modifizierte Phenolharz resultiert.

6. Verwendung nach einem der vorhergehenden Ansprüche, wobei das modifizierte Phenolharz herstellbar ist durch ein Verfahren, in dem freie Hydroxygruppen eines Phenol-Formaldehyd-high-o,o'-Resols
(i) mit einem Tetraalkylester der Orthokieselsäure,
bzw.
(ii) mit einem Dialkyldialkoxysilan,
so umgesetzt werden, dass das modifizierte Phenolharz resultiert.

7. Verwendung nach einem der vorhergehenden Ansprüche, wobei das modifizierte Phenolharz bei Erhitzen unter Luft auf 1000°C im Muffelofen bis zur Massekonstanz einen Rückstand von SiO₂ von 1 Gewichtsprozent bis 30 Gewichtsprozent, bezogen auf das Gewicht der eingesetzten Masse an modifiziertem Phenolharz ergibt.

8. Modifiziertes Phenolharz,
(a) umfassend Phenolharzeinheiten, die substituiert und/oder verknüpft sind durch Ester der Orthokieselsäure
und/oder
herstellbar durch Umsetzung freier Hydroxygruppen eines Phenolharzes mit einem oder mehreren Estern der Orthokieselsäure,
wobei das modifizierte Phenolharz high o,o'-Resol-Einheiten umfasst, wobei einzelne, mehrere oder sämtliche der Phenolharzeinheiten high o,o'-Resol-Einheiten sind,
oder
(b) umfassend Phenolharzeinheiten, die substituiert und/oder verknüpft sind durch Ester der Orthokieselsäure, in denen 1, 2 oder 3 Alkoholreste durch substituierte oder unsubstituierte Kohlenwasserstoffreste ersetzt sind, und/oder
herstellbar durch Umsetzung freier Hydroxygruppen eines Phenolharzes mit einem oder mehreren Estern der Orthokieselsäure, in denen 1, 2 oder 3 Alkoholreste durch substituierte oder unsubstituierte Kohlenwasserstoffreste ersetzt sind,
wobei das modifizierte Pheolharze high o,o'-Resol-Einheiten umfasst, wobei einzelne, mehrere oder sämtliche der Phenolharzeinheiten high o,o'-Resol-Einheiten sind.

9. Modifiziertes Phenolharz nach Anspruch 8, umfassend Phenolharzeinheiten, die verknüpft sind
(i) durch Ester der Orthokieselsäure
bzw.
(ii) durch Ester der Orthokieselsäure, in denen 1 oder 2 Alkoholreste durch substituierte oder unsubstituierte Kohlenwasserstoffreste ersetzt sind,
wobei
(i) einzelne oder mehrere Ester der Orthokieselsäure
bzw.
(ii) einzelne oder mehrere Ester der Orthokieselsäure, in denen 1 oder 2 Alkoholreste durch substituierte oder unsubstituierte Kohlenwasserstoffreste ersetzt sind,
mit genau zwei Phenolharzeinheiten verknüpft sind.

10. Modifiziertes Phenolharz nach einem der Ansprüche 8 und 9, herstellbar durch ein Verfahren, in dem freie Hydroxygruppen eines high o,o'-Resols
(i) mit einem Tetraalkylester der Orthokieselsäure,
bzw.
(ii) mit einem Dialkyldialkoxysilan,
so umgesetzt werden, dass das modifizierte Phenolharz resultiert.

11. Modifiziertes Phenolharz nach einem der Ansprüche 8 bis 10, herstellbar durch ein Verfahren, in dem freie Hydroxygruppen eines Phenol-Formaldehyd-high-o,o'-Resols
(i) mit einem Tetraalkylester der Orthokieselsäure,
bzw.
(ii) mit einem Dialkyldialkoxysilan,
so umgesetzt werden, dass das modifizierte Phenolharz resultiert.

12. Verfahren zur Herstellung eines modifizierten Phenolharzes nach einem der Ansprüche 8 bis 11, mit folgendem Schritt:
- Umsetzen eines Phenolharzes
(i) mit mindestens einem Ester der Orthokieselsäure bzw.
(ii) mit mindestens einem Ester der Orthokieselsäure, in dem 1, 2 oder 3 Alkoholreste durch substituierte oder unsubstituierte Kohlenwasserstoffreste ersetzt sind,
wobei das Phenolharz ein high o,o'-Resol ist.

13. Verfahren nach Anspruch 12, mit folgenden Schritten:
i. Bereitstellen einer Reaktionsmischung umfassend oder bestehend aus einem high o,o'-Resol,
(i) mindestens einem Tetraalkylester der Orthokieselsäure bzw.
(ii) mindestens einem Tetraalkylester der Orthokieselsäure, in denen 1, 2 oder 3 Alkoholreste durch substituierte oder unsubstituierte Kohlenwasserstoffreste ersetzt sind,
und
einer Säure mit einem pK_{S} ≤ 5, wobei das Verhältnis der Stoffmenge an Silizium zum eingesetzten Gewicht an Grundharz im Bereich von 0,5 bis 20,0 mol Si pro kg Grundharz liegt,
ii. Umsetzen der Mischung bei einer Temperatur im Bereich von 20 bis 150°C und einer Reaktionszeit im Bereich von 1 Minute bis 20 Stunden,
iii. Neutralisieren der gemäß Schritt ii umgesetzten Reaktionsmischung,
iv. Abdestillieren des bei der Umsetzung gemäß Schritt ii entstandenen Alkohols und gegebenenfalls eines Lösungsmittels aus der neutralisierten Reaktionsmischung bei reduziertem Druck.

14. Verfahren nach Anspruch 12 oder 13, wobei das Phenolharz ein Phenol-Formaldehyd-high-o,o'-Resol ist.

15. Verfahren zur Herstellung einer gehärteten Gießereiform oder eines gehärteten Gießereikerns nach dem Cold-Box-Verfahren mit folgenden Schritten:
i. Herstellen einer Mischung umfassend oder bestehend aus einem modifizierten Phenolharz wie in einem der Ansprüche 1 bis 7 definiert, einem Polyisocyanat und einem Formstoff,
ii. Formen der Mischung zu einer Gießereiform oder einem Gießereikern und
iii. Härten der geformten Mischung, gegebenenfalls unter Einsatz eines Katalysators.

16. Verfahren nach Anspruch 15, wobei das modifizierte Phenolharz und/oder das Polyisocyanat vor dem Herstellen der Mischung in einem Lösungsmittel gelöst werden.

17. Verfahren nach einem der Ansprüche 15 und 16, wobei der Katalysator ein Amin ist.

18. Nach dem Cold-Box-Verfahren gehärtete Gießereiform oder gehärteter Gießereikern, umfassend einen Formstoff und ein ausgehärtetes Bindemittel, wobei das Bindemittel Phenolharzeinheiten umfasst, die substituiert und/oder verknüpft sind
(i) durch Ester der Orthokieselsäure, der Dikieselsäure und/oder einer oder mehrerer Polykieselsäuren
bzw.
(ii) durch Ester der Orthokieselsäure, in denen 1, 2 oder 3 Alkoholreste durch substituierte oder unsubstituierte Kohlenwasserstoffreste ersetzt sind,
wobei die Phenolharzeinheiten high- o, o'-Resol-Einheiten sind.

19. Zweikomponenten-Bindemittelsystem, bestehend aus einer Phenolharz-Komponente und einer Polyisocyanat-Komponente, wobei die Polyisocyanat-Komponente ein Polyisocyanat mit mindestens zwei Isocyanat-Gruppen pro Molekül umfasst und die Phenolharz-Komponente ein modifiziertes Phenolharz wie in Ansprüchen 1 bis 7 definiert umfasst.

## Claims

1. A use of a modified phenolic resin as
a binder or a constituent of a binder in the cold-box method or polyurethane no-bake method,
(a) wherein the modified phenolic resin
comprises phenolic resin units which are substituted and/or linked by esters of orthosilicic acid, disilicic acid and/or one or more polysilicic acids
and/or
can be produced by reacting free hydroxyl groups of a phenolic resin with one or more esters of orthosilicic acid, disilicic acid and/or one or more polysilicic acids,
wherein the modified phenolic resin comprises high o,o'-resol units,
or
(b) wherein the modified phenolic resin
comprises phenolic resin units which are substituted and/or linked by esters of orthosilicic acid in which 1, 2 or 3 alcohol residues are replaced by substituted or unsubstituted hydrocarbon residues,
and/or
can be produced by reacting free hydroxyl groups of a phenolic resin with one or more esters of orthosilicic acid in which 1, 2 or 3 alcohol residues are replaced by substituted or unsubstituted hydrocarbon residues,
wherein the modified phenolic resin comprises high o,o'-resol units.

2. The use as claimed in claim 1, wherein the modified phenolic resin comprises high o,o'-resol units, wherein individual, a plurality of or all of the phenolic resin units are high o,o'-resol units.

3. The use as claimed in one of the preceding claims, wherein the modified phenolic resin comprises phenolic resin units which are linked
(i) by esters of orthosilicic acid
or
(ii) by esters of orthosilicic acid in which 1 or 2 alcohol residues are replaced by substituted or unsubstituted hydrocarbon residues.

4. The use as claimed in one of the preceding claims, wherein the modified phenolic resin can be produced by a method in which free hydroxyl groups of a phenolic resin are reacted
(i) with a tetraalkyl ester of orthosilicic acid,
or
(ii) with a dialkyldialkoxysilane,
so that the modified phenolic resin is obtained.

5. The use as claimed in one of the preceding claims, wherein the modified phenolic resin can be produced by a method in which free hydroxyl groups of a high o,o'-resol are reacted
(i) with a tetraalkyl ester of orthosilicic acid,
or
(ii) with a dialkyldialkoxysilane,
so that the modified phenolic resin is obtained.

6. The use as claimed in one of the preceding claims, wherein the modified phenolic resin can be produced by a method in which free hydroxyl groups of a phenol-formaldehyde high-o,o'-resol are reacted
(i) with a tetraalkyl ester of orthosilicic acid,
or
(ii) with a dialkyldialkoxysilane,
so that the modified phenolic resin is obtained.

7. The use as claimed in one of the preceding claims, wherein, when heated in air to 1000°C in a muffle furnace to constant mass, the modified phenolic resin gives an SiO₂ residue of from 1 percent by weight to 30 percent by weight, expressed in terms of the weight of the mass of modified phenolic resin used.

8. A modified phenolic resin,
(a) comprising phenolic resin units which are substituted and/or linked by esters of orthosilicic acid,
and/or
which can be produced by reacting free hydroxyl groups of a phenolic resin with one or more esters of orthosilicic acid,
wherein the modified phenolic resin comprises high o,o'-resol units, wherein individual, a plurality of or all of the phenolic resin units are high o,o'-resol units,
or
(b) comprising phenolic resin units which are substituted and/or linked by esters of orthosilicic acid in which 1, 2 or 3 alcohol residues are replaced by substituted or unsubstituted hydrocarbon residues,
and/or
which can be produced by reacting free hydroxyl groups of a phenolic resin with one or more esters of orthosilicic acid in which 1, 2 or 3 alcohol residues are replaced by substituted or unsubstituted hydrocarbon residues,
wherein the modified phenolic resins comprise high o,o'-resol units, wherein individual, a plurality of or all of the phenolic resin units are high o,o'-resol units.

9. The modified phenolic resin as claimed in claim 8, comprising phenolic resin units which are linked
(i) by esters of orthosilicic acid
or
(ii) by esters of orthosilicic acid in which 1 or 2 alcohol residues are replaced by substituted or unsubstituted hydrocarbon residues,
wherein
(i) individual or a plurality of esters of orthosilicic acid
or
(ii) individual or a plurality of esters of orthosilicic acid in which 1 or 2 alcohol residues are replaced by substituted or unsubstituted hydrocarbon residues, are linked to exactly two phenolic resin units.

10. The modified phenolic resin as claimed in either of claims 8 and 9, which can be produced by a method in which free hydroxyl groups of a high o,o'-resol are reacted
(i) with a tetraalkyl ester of orthosilicic acid,
or
(ii) with a dialkyldialkoxysilane,
so that the modified phenolic resin is obtained.

11. The modified phenolic resin as claimed in one of claims 8 to 10, which can be produced by a method in which free hydroxyl groups of a phenol-formaldehyde high-o,o'-resol are reacted
(i) with a tetraalkyl ester of orthosilicic acid,
or
(ii) with a dialkyldialkoxysilane,
so that the modified phenolic resin is obtained.

12. A method for producing a modified phenolic resin as claimed in one of claims 8 to 11, comprising the following step:
- reacting a phenolic resin
(i) with at least one ester of orthosilicic acid
or
(ii) with at least one ester of orthosilicic acid in which 1, 2 or 3 alcohol residues are replaced by substituted or unsubstituted hydrocarbon residues,
wherein the phenolic resin is a high o,o'-resol.

13. The method as claimed in claim 12, comprising the following steps:
i. preparing a reaction mixture comprising or consisting of
a high o,o'-resol,
(i) at least one tetraalkyl ester of orthosilicic acid
or
(ii) at least one tetraalkyl ester of orthosilicic acid in which 1, 2 or 3 alcohol residues are replaced by substituted or unsubstituted hydrocarbon residues, and
an acid having a pKₐ ≤ 5, wherein the ratio of the amount of silicon to the weight of basic resin used lies in the range of from 0.5 to 20.0 mol of Si per kg of basic resin,
ii. reacting the mixture at a temperature in the range of from 20 to 150°C with a reaction time in the range of from 1 minute to 20 hours,
iii. neutralizing the reaction mixture reacted according to step ii,
iv. distilling off the alcohol formed during the reaction according to step ii and optionally a solvent from the neutralized reaction mixture at reduced pressure.

14. The method as claimed in claim 12 or 13, wherein the phenolic resin is a phenol-formaldehyde high-o,o'-resol.

15. A method for producing a hardened foundry mold or a hardened foundry core according to the cold-box method, comprising the following steps:
i. producing a mixture comprising or consisting of a modified phenolic resin as defined in one of claims 1 to 7, a polyisocyanate and a molding material,
ii. molding the mixture to form a foundry mold or a foundry core and
iii. hardening the molded mixture, optionally by using a catalyst.

16. The method as claimed in claim 15, wherein the modified phenolic resin and/or the polyisocyanate are dissolved in a solvent before producing the mixture.

17. The method as claimed in claim 15 or 16, wherein the catalyst is an amine.

18. A foundry mold hardened in the cold-box method or a hardened foundry core, comprising a molding material and a hardened binder, the binder comprising phenolic resin units which are substituted and/or linked
(i) by esters of orthosilicic acid, disilicic acid and/or one or more polysilicic acids
or
(ii) by esters of orthosilicic acid in which 1, 2 or 3 alcohol residues are replaced by substituted or unsubstituted hydrocarbon residues,
wherein the phenolic resin units are high o,o'-resol units.

19. A two-component binder system, consisting of a phenolic resin component and a polyisocyanate component, wherein the polyisocyanate component comprises a polyisocyanate having at least two isocyanate groups per molecule and the phenolic resin component comprises a modified phenolic resin as defined in claims 1 to 7.

## Revendications

1. Utilisation d'une résine phénolique modifiée en tant que liant ou composant d'un liant dans le procédé en boîte froide ou le procédé sans cuisson de polyuréthane,
(a) dans laquelle la résine phénolique modifiée comprend des unités de résine phénolique qui sont substituées et/ou liées par des esters d'acide orthosilicique, d'acide disilicique et/ou d'un ou de plusieurs acides polysiliciques
et/ou
peut être fabriquée par conversion des groupes hydroxy libres d'une résine phénolique avec un ou plusieurs esters d'acide orthosilicique, d'acide disilicique et/ou d'un ou de plusieurs acides polysiliciques,
dans laquelle la résine phénolique modifiée comprend des unités haut o,o'-résol,
ou
(b) dans laquelle la résine phénolique modifiée comprend des unités de résine phénolique qui sont substituées et/ou liées par des esters d'acide orthosilicique, dans lesquels 1, 2 ou 3 résidus alcools sont remplacés par des résidus hydrocarbonés substitués ou non substitués,
et/ou
peut être fabriquée par conversion des groupes hydroxy libres d'une résine phénolique avec un ou plusieurs esters d'acide orthosilicique, dans lesquels 1, 2 ou 3 résidus alcools sont remplacés par des résidus hydrocarbonés substitués ou non substitués,
dans laquelle la résine phénolique modifiée comprend des unités haut o,o'-résol.

2. Utilisation selon la revendication 1, dans laquelle la résine phénolique modifiée comprend des unités haut o,o'-résol, dans laquelle quelques, plusieurs ou toutes les unités de résine phénolique sont des unités haut o,o'-résol.

3. Utilisation selon l'une des revendications précédentes, dans laquelle la résine phénolique modifiée comprend des unités de résine phénolique, qui sont liées
(i) par des esters d'acide orthosilicique,
ou
(ii) par des esters d'acide orthosilicique, dans lesquels 1 ou 2 résidus alcools sont remplacés par des résidus hydrocarbonés substitués ou non substitués.

4. Utilisation selon l'une des revendications précédentes, dans laquelle la résine phénolique modifiée peut être fabriquée par un procédé dans lequel des groupes hydroxy libres d'une résine phénolique sont convertis
(i) avec un tétraalkylester d'acide orthosilicique,
ou
(ii) avec un dialkyldialcoxysilane,
afin d'obtenir la résine phénolique modifiée.

5. Utilisation selon l'une des revendications précédentes, dans laquelle la résine phénolique modifiée peut être fabriquée par un procédé dans lequel des groupes hydroxy libres d'un haut o,o'-résol sont convertis
(i) avec un tétraalkylester d'acide orthosilicique,
ou
(ii) avec un dialkyldialcoxysilane,
afin d'obtenir la résine phénolique modifiée.

6. Utilisation selon l'une des revendications précédentes, dans laquelle la résine phénolique modifiée peut être fabriquée par un procédé dans lequel des groupes hydroxy libres d'un phénol-formaldéhyde-haut-o,o'-résol sont convertis
(i) avec un tétraalkylester d'acide orthosilicique,
ou
(ii) avec un dialkyldialcoxysilane,
afin d'obtenir la résine phénolique modifiée.

7. Utilisation selon l'une des revendications précédentes, dans laquelle la résine phénolique modifiée donne un résidu de SiO₂ de 1% en poids à 30% en poids, par rapport au poids de la masse mise en oeuvre de résine phénolique modifiée, lors du chauffage dans un air à 1000 °C dans le four à moufle jusqu'à constance de la masse.

8. Résine phénolique modifiée,
(a) comprenant des unités de résine phénolique qui sont substituées et/ou liées par des esters d'acide orthosilicique, et/ou
pouvant être fabriquée par conversion des groupes hydroxy libres d'une résine phénolique avec un ou plusieurs esters d'acide orthosilicique,
dans laquelle la résine phénolique modifiée comprend des unités haut o,o'-résol,
dans laquelle quelques, plusieurs ou toutes les unités de résine phénolique sont des unités haut o,o'-résol,
ou
(b) comprenant des unités de résine phénolique qui sont substituées et/ou liées par des esters d'acide orthosilicique, dans lesquels 1, 2 ou 3 résidus alcools sont remplacés par des résidus hydrocarbonés substitués ou non substitués,
et/ou
pouvant être fabriquée par conversion des groupes hydroxy libres d'une résine phénolique avec un ou plusieurs esters d'acide orthosilicique, dans lesquels 1, 2 ou 3 résidus alcools sont remplacés par des résidus hydrocarbonés substitués ou non substitués,
dans laquelle la résine phénolique modifiée comprend des unités haut o,o'-résol,
dans laquelle quelques, plusieurs ou toutes les unités de résine phénolique sont des unités haut o,o'-résol.

9. Résine phénolique modifiée selon la revendication 8, comprenant des unités de résine phénolique qui sont liées
(i) par des esters d'acide orthosilicique
ou
(ii) par des esters d'acide orthosilicique, dans lesquels 1 ou 2 résidus alcools sont remplacés par des résidus hydrocarbonés substitués ou non substitués,
dans laquelle
(i) quelques ou plusieurs esters d'acide orthosilicique
ou
(ii) quelques ou plusieurs esters d'acide orthosilicique, dans lesquels 1 ou 2 résidus alcools sont remplacés par des résidus hydrocarbonés substitués ou non substitués,
sont liés à exactement deux unités de résine phénolique.

10. Résine phénolique modifiée selon l'une des revendications 8 et 9, pouvant être fabriquée par un procédé dans lequel des groupes hydroxy libres d'un haut o,o'-résol sont convertis
(i) avec un tétraalkylester d'acide orthosilicique,
ou
(ii) avec un dialkyldialcoxysilane,
afin d'obtenir la résine phénolique modifiée.

11. Résine phénolique modifiée selon l'une des revendications 8 à 10, pouvant être fabriquée par un procédé dans lequel des groupes hydroxy libres d'un phénol-formaldéhyde-haut-o,o'-résol sont convertis
(i) avec un tétraalkylester d'acide orthosilicique,
ou
(ii) avec un dialkyldialcoxysilane,
afin d'obtenir la résine phénolique modifiée.

12. Procédé de fabrication d'une résine phénolique modifiée selon l'une des revendications 8 à 11, comprenant l'étape suivante :
- conversion d'une résine phénolique
(i) avec au moins un ester d'acide orthosilicique,
ou
(ii) avec au moins un ester d'acide orthosilicique, dans lequel 1, 2 ou 3 résidus alcools sont remplacés par des résidus hydrocarbonés substitués ou non substitués,
dans lequel la résine phénolique est un haut o,o'-résol.

13. Procédé selon la revendication 12, comprenant les étapes suivantes :
i. préparation d'un mélange réactionnel comprenant ou se composant d'un haut o,o'-résol,
(i) d'au moins un tétraalkylester d'acide orthosilicique, ou
(ii) d'au moins un tétraalkylester d'acide orthosilicique, dans lequel 1, 2 ou 3 résidus alcools sont remplacés par des résidus hydrocarbonés substitués ou non substitués,
et
un acide ayant un pKₛ ≤ 5, dans lequel le rapport de la quantité de substance de silicium sur le poids de résine de base mis en oeuvre est compris dans la plage de 0,5 à 20, moles de Si par kg de résine de base,
ii. conversion du mélange à une température comprise dans la plage de 20 à 150 °C et pendant un temps de réaction dans la plage de 1 minute à 20 heures,
iii. neutralisation du mélange réactionnel converti selon l'étape ii,
iv. distillation de l'alcool résultant lors de la conversion selon l'étape ii et le cas échéant d'un solvant à partir du mélange réactionnel neutralisé sous pression réduite.

14. Procédé selon la revendication 12 ou 13, dans lequel la résine phénolique est un phénol-formaldéhyde-haut-o,o'-résol.

15. Procédé de fabrication d'un moule de fonderie durci ou d'un noyau de fonderie durci selon le procédé en boîte froide, comprenant les étapes suivantes :
i. fabrication d'un mélange comprenant ou se composant d'une résine phénolique modifiée telle que définie selon l'une des revendications 1 à 7, d'un polyisocyanate et d'un matériau de moule,
ii. formage du mélange pour donner un moule de fonderie ou un noyau de fonderie et
iii. durcissement du mélange formé, le cas échéant en mettant en oeuvre un catalyseur.

16. Procédé selon la revendication 15, dans lequel la résine phénolique modifiée et/ou le polyisocyanate sont dissous dans un solvant avant la fabrication du mélange.

17. Procédé selon l'une des revendications 15 et 16, dans lequel le catalyseur est une amine.

18. Moule de fonderie durci ou noyau de fonderie durci selon le procédé en boîte froide, comprenant un matériau de moule et un liant réticulé, dans lequel le liant comprend des unités de résine phénolique qui sont substituées et/ou liées
(i) par des esters d'acide orthosilicique, d'acide disilicique et/ou d'un ou de plusieurs acides polysiliciques
ou
(ii) par des esters d'acide orthosilicique, dans lesquels 1, 2 ou 3 résidus alcools sont remplacés par des résidus hydrocarbonés substitués ou non substitués,
dans lequel les unités de résine phénolique sont des unités haut-o,o'-résol.

19. Système de liants bicomposant, constitué d'un composant résine phénolique et d'un composant polyisocyanate, dans lequel le composant polyisocyanate est un polyisocyanate comprenant au moins deux groupes isocyanate par molécule et le composant résine phénolique comprend une résine phénolique modifiée telle que définie dans les revendications 1 à 7.
